# EUROPEAN PATENT SPECIFICATION

(11) **EP 4 589 908 B1**
(45) Date of publication and mention of the grant of the patent: **23.09.2026**
(21) Application number: 22959745.5
(22) Date of filing: 26.09.2022
(51) Int. Cl.: H04L 43/06, H04L 43/04, H04L 67/12, G06F 21/55, H04L 9/40

(54) **INTRUSION DETECTION METHOD, APPARATUS AND SYSTEM**
VERFAHREN, VORRICHTUNG UND SYSTEM ZUR EINDRINGUNGSERKENNUNG
PROCÉDÉ, APPAREIL ET SYSTÈME DE DÉTECTION D'INTRUSION

(43) Date of publication of application: 23.07.2025
(73) Proprietor: Yinwang Intelligent Technologies Co., Ltd., Shenzhen, Guangdong 518110 (CN)
(72) Inventor: WANG, Yangyizhou, Shenzhen, Guangdong 518129 (CN); LI, Yongjun, Shenzhen, Guangdong 518129 (CN)
(74) Representative: Thun, Clemens
(86) International application number: PCT/CN2022/121397
(87) International publication number: WO 2024/065093

(56) References cited:
- EP-A1- 3 751 818
- WO-A1-2021/162473
- CN-A- 107 948 172
- CN-A- 109 495 438
- CN-A- 109 495 439
- CN-A- 112 822 684
- US-A1- 2018 351 980
- US-A1- 2019 081 966

## Description

### TECHNICAL FIELD

This application relates to the field of information security technologies, and in particular, to an intrusion detection method, an apparatus, and a system.

### BACKGROUND

With development and progress of science and technology, intelligent networking of vehicles has gradually become one of focuses of research in the vehicle field. However, development of intelligence and networking makes application environments in the vehicle field more difficult to manage and more special. Network security threats faced by intelligent networking are also more prominent. Due to high networking, in a process of implementing a vehicle service, an electronic control unit (electronic control unit, ECU) inside a vehicle, a cloud server, and an application (application, APP) running on a smart terminal of a vehicle owner that may be related to the service all become potential intrusion attack objects.

Therefore, how to perform accurate detection (detection) on a network security intrusion (intrusion) on the vehicle service to ensure security of the vehicle service is still an important problem that needs to be urgently resolved.

The document US 2018/351980 A1 shows a system and method for providing fleet cyber-security.

The document US 2019/0081966 A1 shows system and methods for in-vehicle network intrusion detection.

### SUMMARY

The present invention is defined by the independent claims. Further advantageous developments are shown by the dependent claims.

This application provides an intrusion detection method, an apparatus, and a system, to help accurately detect an intrusion attack against a vehicle service.

According to a first aspect, an embodiment of this application provides an intrusion detection method. The method may be performed by a server. The server may be implemented as a communication apparatus. The communication apparatus may be an independent device, or may be a chip or a component in a device, or may be software, and may be deployed on a cloud, a roadside device, a remote server, a local server, or the like. A product form and a deployment manner of the server are not limited in embodiments of this application.

The method may include: obtaining run logs of at least two service nodes, where the at least two service nodes are associated with a target service; and determining, based on the run logs of the at least two service nodes and according to a target detection rule, whether the intrusion event occurs, where the target detection rule is used to describe a method for detecting the intrusion event associated with the target service.

According to the foregoing method, the at least two service nodes are nodes for jointly implementing the target service, and the server can detect, by parsing the run logs of the at least two service nodes, whether the intrusion event occurs. From a service level, the method can be used to perform comprehensive intrusion detection on a service node related to a plurality of ends or a plurality of systems, without being limited to a single service node or system. This helps improve efficiency of detecting the intrusion event.

For example, the target service in this embodiment of this application may be an internet of vehicles service (or referred to as a vehicle service), and includes but is not limited to a service related to an over-the-air (over-the-air, OTA) upgrade of a vehicle, for example, OTA content confirmation, OTA upgrade package download, OTA upgrade package installation, or OTA upgrade package activation, a vehicle Bluetooth key service, a vehicle remote control service, and the like. The service node configured to implement the target service may include at least one of the following: the server, an application (application, APP) running on a smart terminal, an electronic control unit (electronic control unit, ECU) inside the vehicle, and the like. The target service and the service node for implementing the target service are not limited in embodiments of this application.

It may be understood that the intrusion detection method in this embodiment of this application may be further extended to another field for application, for example, an internet of things (internet of things, IOT) field that has a similar feature to the internet of vehicles service. For example, a related service may include but is not limited to a smart home service. The service node may include at least one of the following: a plurality of terminal devices such as a smart gateway, a smart lock, a smart lamp, and a house owner APP. Details are not described herein.

It may be understood that, in this embodiment of this application, the run log is merely an example of integrating information about the plurality of ends or the plurality of systems by the server, and is not a limitation. In another embodiment, the run log may be replaced with other information that can represent a service running status. This is not limited in embodiments of this application.

With reference to the first aspect, in a possible design, the target detection rule includes a rule that indicates a detection field of the intrusion event and at least one detection condition. The detection field represents a feature of a potential intrusion attack behavior toward the target service. The determining, based on the run logs of the at least two service nodes and according to a target detection rule, whether the intrusion event occurs includes: obtaining target data from the run logs of the at least two service nodes based on the detection field indicated by the target detection rule; and when the run log and the target data meet all detection conditions in the at least one detection condition, determining that the intrusion event does not occur; or when the run log or the target data does not meet any detection condition in the at least one detection condition, determining that the intrusion event occurs.

According to the foregoing method, the server can parse the obtained run logs of the at least two service nodes according to the preset detection rule, and detect, by using a degree of matching between the detection rule, and the run log and the target data in the run log, whether the intrusion event occurs.

It may be understood that, in this embodiment of this application, specific content of the detection condition affects determining of a detection result. For example, in some designs, contrary to that in the foregoing descriptions, based on the content of the detection condition, it may alternatively be set as follows: When the run log and the target data meet all the detection conditions in the at least one detection condition, it is determined that the intrusion event occurs; or when the run log or the target data does not meet any detection condition in the at least one detection condition, it is determined that the intrusion event does not occur.

Different intrusion events may be detected in different ways. In some embodiments, for different intrusion events, it may be further set as follows: For some intrusion events, when the run log and the target data meet all the detection conditions in the at least one detection condition, it is determined that the intrusion event does not occur, or when the run log or the target data does not meet any detection condition in the at least one detection condition, it is determined that the intrusion event occurs; and for some other intrusion events, when the run log and the target data meet all the detection conditions in the at least one detection condition, it is determined that the intrusion event occurs, or when the run log or the target data does not meet any detection condition in the at least one detection condition, it is determined that the intrusion event does not occur.

In other words, detection on the intrusion event needs to be adjusted according to the detection rule and based on the specific content the detection condition. This is not limited in embodiments of this application.

With reference to the first aspect, in a possible design, the detection field of the intrusion event includes a timestamp. The target data includes a time value corresponding to the timestamp. The at least one detection condition includes: A difference between time values obtained from the run logs of the at least two service nodes is less than or equal to a first threshold. Correspondingly, when performing intrusion detection, the server may determine, when the difference between the obtained time values meets the detection condition, that an intrusion detection event does not occur, or determine, when the difference between the obtained time values does not meet the detection condition, that the intrusion detection event occurs.

According to the foregoing method, the detection field of the intrusion event can include the timestamp. When performing intrusion detection, the server can compare timestamp information extracted from the run logs obtained from the at least two service nodes. If a difference obtained through pairwise comparison is large, it indicates that an intrusion may exist on a service node.

It may be understood that, in this embodiment of this application, when the detection field includes the time stamp, the at least one detection condition may be replaced with the following: The difference between the time values obtained from the run logs of the at least two service nodes is greater than or equal to a second threshold. The second threshold may be greater than or equal to the first threshold. Correspondingly, when performing intrusion detection, the server may determine, when the difference between the obtained time values meets the detection condition, that the intrusion detection event occurs, or determine, when the difference between the obtained time values does not meet the detection condition, that the intrusion detection event does not occur.

With reference to the first aspect, in a possible design, the detection field of the intrusion event includes a uniform resource locator URL. The target data includes URL data. The at least one detection condition includes: Content of URL data obtained from the run logs of the at least two service nodes is the same. Correspondingly, when performing intrusion detection, the server may determine, when the obtained URL data meets the detection condition, that the intrusion detection event does not occur, or determine, when the obtained URL data does not meet the detection condition, that the intrusion detection event occurs.

It may be understood that, in this embodiment of this application, when the detection field includes the URL, the at least one detection condition may be replaced with the following: The content of the URL data obtained from the run logs of the at least two service nodes is different. Correspondingly, when performing intrusion detection, the server may determine, when the obtained URL data meets the detection condition, that the intrusion detection event occurs, or determine, when the obtained URL data does not meet the detection condition, that the intrusion detection event does not occur.

With reference to the first aspect, in a possible design, the detection field of the intrusion event includes an operation identifier. The operation identifier is associated with execution of an operation included in the target service. The target data includes data corresponding to the operation identifier. The at least one detection condition includes: Content of data corresponding to operation identifiers obtained from the run logs of the at least two service nodes is the same. When performing intrusion detection, the server may determine, when the data corresponding to the obtained operation identifiers meets the detection condition, that the intrusion detection event does not occur, or determine, when the data corresponding to the obtained operation identifiers does not meet the detection condition, that the intrusion detection event occurs.

It may be understood that, in this embodiment of this application, when the detection field includes the operation identifier, the at least one detection condition may be replaced with the following: The content of the data corresponding to the operation identifiers obtained from the run logs of the at least two service nodes is different. Correspondingly, when performing intrusion detection, the server may determine, when the data corresponding to the obtained operation identifiers meets the detection condition, that the intrusion detection event does not occur, or determine, when the data corresponding to the obtained operation identifiers does not meet the detection condition, that the intrusion detection event occurs.

With reference to the first aspect, in a possible design, the method further includes: obtaining the target detection rule from a detection rule set based on the run log. The detection rule set includes candidate detection rules that are pre-configured for a plurality of potential intrusion attack behaviors toward the target service. The candidate detection rule is used to describe a method for detecting an intrusion event corresponding to the potential intrusion attack behavior.

According to the foregoing method, the server can preset the detection rule set, and parse the obtained run log according to the target detection rule in the detection rule set, to determine whether the intrusion event occurs.

It may be understood that, in this embodiment of this application, the detection rule set may be written in advance based on known and limited intrusion attack means, and the detection rule set may be stored on the server in a form of program code. An implementation of the detection rule set and any candidate detection rule is not limited in embodiments of this application.

With reference to the first aspect, in a possible design, the target detection rule includes all the candidate detection rules in the detection rule set; or the target detection rule includes a candidate detection rule that is in the detection rule set and that is associated with the target service.

With reference to the first aspect, in a possible design, the method further includes: receiving configuration information. The configuration information is used to modify the candidate detection rule in the detection rule set, and/or the configuration information is used to newly add a candidate detection rule to the detection rule set. It may be understood that, in this embodiment of this application, "modify" may include modifying content of the candidate detection rule or deleting the candidate detection rule.

With reference to the first aspect, in a possible design, the method further includes: outputting a detection result of the intrusion event. In an optional implementation, the detection result of the intrusion event may be output on an output device associated with the server.

With reference to the first aspect, in a possible design, the detection result of the intrusion event includes at least one of the following information of the intrusion event: an event identifier, an event name, a threat level, detection time, a potential risk, an intrusion attack object, an intrusion detection procedure, or intrusion detection context information. For example, the detection result may be output in at least one of the following presentation manners: a text, an image, and a line.

With reference to the first aspect, in a possible design, the target service includes a vehicle service. The at least two service nodes include the server, and a target vehicle or user equipment that is of a user and that is used to manage the target vehicle. It should be noted that the vehicle service described herein is a general term for an internet of vehicles service. The internet of vehicles service may include but is not limited to the service related to the OTA upgrade of the vehicle, for example, OTA content confirmation, OTA upgrade package download, OTA upgrade package installation, or OTA upgrade package activation, the vehicle Bluetooth key service, the vehicle remote control service, and the like. The service node configured to implement the target service may include the at least one of the following: the server, the application (application, APP) running on the smart terminal, the electronic control unit (electronic control unit, ECU) inside the vehicle, and the like. The target service and the service node for implementing the target service are not limited in embodiments of this application.

According to a second aspect, an embodiment of this application further provides an intrusion detection method. The method may be implemented by a human machine interface (human machine interaction, HMI) (or referred to as a server frontend). The human machine interface may be, for example, an HMI of an electronic device associated with a server, and may be configured to output information from the server. A presentation manner of content of the information may include but is not limited to an image, a text, a line, and the like. In an optional implementation, the HMI may further have or may be further associated with an input device, and may receive information from a frontend user (for example, a security expert) via the input device. This is not limited in embodiments of this application.

The method may include: receiving an intrusion detection result of a target intrusion event, where the intrusion detection result indicates at least one of the following information of the target intrusion event: an event identifier, an event name, a threat level, detection time, a potential risk, an intrusion attack object, an intrusion detection procedure, or intrusion detection context information; and outputting the intrusion detection result of the target intrusion event.

According to the foregoing method, the HMI can output the intrusion detection result of the target intrusion event for display. This helps the frontend user view the intrusion detection result, and perform confirmation, source tracing, response, and the like on the target intrusion event by using related context information.

With reference to the second aspect, in a possible design, the method may further include: receiving second indication information that is input in response to the intrusion detection result. The second indication information is used to confirm the intrusion event, or the second indication information indicates a method for processing the intrusion event.

According to the foregoing method, the HMI can receive the second indication information via the input device. The second indication information can be delivered by the frontend user, and can be used to perform confirmation, source tracing, response, and the like on the target intrusion event.

With reference to the second aspect, in a possible design, the method further includes: outputting a first interface, where the first interface is used to present a statistical result of intrusion events from at least one dimension; and receiving control information that is input on the first interface, where the control information indicates to output the intrusion detection result of the target intrusion event.

According to the foregoing method, the HMI can present the statistical result of the intrusion events from the at least one dimension. The frontend user can input the control information to the HMI based on a requirement of the frontend user, to trigger presentation of the intrusion detection result of the target intrusion event.

According to a third aspect, an embodiment of this application provides a communication apparatus. For example, the communication apparatus may be deployed on a server. The communication apparatus may include: an obtaining unit, configured to obtain run logs of at least two service nodes, where the at least two service nodes are associated with a target service; and a determining unit, configured to determine, based on the run logs of the at least two service nodes and according to a target detection rule, whether the intrusion event occurs, where the target detection rule is used to describe a method for detecting the intrusion event associated with the target service.

With reference to the third aspect, in a possible design, the target detection rule includes a rule that indicates a detection field of the intrusion event and at least one detection condition. The detection field represents a feature of a potential intrusion attack behavior toward the target service. The determining unit is configured to: obtain target data from the run logs of the at least two service nodes based on the detection field indicated by the target detection rule; and when the run log and the target data meet all detection conditions in the at least one detection condition, determine that the intrusion event does not occur; or when the run log or the target data does not meet any detection condition in the at least one detection condition, determine that the intrusion event occurs.

With reference to the third aspect, in a possible design, the detection field of the intrusion event includes a timestamp. The target data includes a time value corresponding to the timestamp. The at least one detection condition includes: A difference between time values obtained from the run logs of the at least two service nodes is less than or equal to a first threshold.

With reference to the third aspect, in a possible design, the detection field of the intrusion event includes a uniform resource locator URL. The target data includes URL data. The at least one detection condition includes: Content of URL data obtained from the run logs of the at least two service nodes is the same.

With reference to the third aspect, in a possible design, the detection field of the intrusion event includes an operation identifier. The operation identifier is associated with execution of an operation included in the target service. The target data includes data corresponding to the operation identifier. The at least one detection condition includes: Content of data corresponding to operation identifiers obtained from the run logs of the at least two service nodes is the same.

With reference to the third aspect, in a possible design, the obtaining unit is further configured to obtain the target detection rule from a detection rule set based on the run log. The detection rule set includes candidate detection rules that are pre-configured for a plurality of potential intrusion attack behaviors toward the target service. The candidate detection rule is used to describe a method for detecting an intrusion event corresponding to the potential intrusion attack behavior.

With reference to the third aspect, in a possible design, the target detection rule includes all the candidate detection rules in the detection rule set; or the target detection rule includes a candidate detection rule that is in the detection rule set and that is associated with the target service.

With reference to the third aspect, in a possible design, the communication apparatus further includes a transceiver unit, configured to receive configuration information. The configuration information is used to modify the candidate detection rule in the detection rule set, and/or the configuration information is used to newly add a candidate detection rule to the detection rule set.

With reference to the third aspect, in a possible design, the communication apparatus further includes an output unit, configured to output a detection result of the intrusion event on an output device associated with the server.

With reference to the third aspect, in a possible design, the detection result of the intrusion event includes at least one of the following information of the intrusion event: an event identifier, an event name, a threat level, detection time, a potential risk, an intrusion attack object, an intrusion detection procedure, or intrusion detection context information.

With reference to the third aspect, in a possible design, the target service includes a vehicle service. The at least two service nodes include the server, and a target vehicle or user equipment that is of a user and that is used to manage the target vehicle.

According to a fourth aspect, an embodiment of this application provides a human machine interface HMI, including: a communication unit, configured to receive an intrusion detection result of a target intrusion event, where the intrusion detection result indicates at least one of the following information of the target intrusion event: an event identifier, an event name, a threat level, detection time, a potential risk, an intrusion attack object, an intrusion detection procedure, or intrusion detection context information; and an output unit, configured to output the intrusion detection result of the target intrusion event.

With reference to the fourth aspect, in a possible design, the communication unit is further configured to receive second indication information that is input in response to the intrusion detection result. The second indication information is used to confirm the intrusion event, or the second indication information indicates a method for processing the intrusion event.

With reference to the fourth aspect, in a possible design, the output unit is further configured to output a first interface. The first interface is used to present a statistical result of intrusion events from at least one dimension. The communication unit is further configured to receive control information that is input on the first interface. The control information indicates to output the intrusion detection result of the target intrusion event.

According to a fifth aspect, an embodiment of this application provides a communication apparatus. The communication apparatus includes: a communication interface, configured to communicate with another apparatus; and a processor, coupled to the communication interface, so that the communication apparatus performs the method according to any one of the first aspect and the possible designs of the first aspect, or performs the method according to any one of the second aspect and the possible designs of the second aspect.

According to a sixth aspect, an embodiment of this application provides a communication system, including a server. The server is configured to implement the method according to any one of the first aspect and the possible designs of the first aspect.

With reference to the sixth aspect, in a possible design, the communication system further includes a human machine interface HMI. The HMI is configured to implement the method according to any one of the second aspect and the possible designs of the second aspect.

According to a seventh aspect, an embodiment of this application provides a chip system, including at least one processor and an interface circuit. The processor is configured to execute instructions and/or data exchange through the interface circuit, so that the chip system performs the method according to any one of the first aspect and the possible designs of the first aspect, or performs the method according to any one of the second aspect and the possible designs of the second aspect.

According to an eighth aspect, an embodiment of this application provides a computer-readable storage medium, including a program or instructions. When the program or the instructions are executed, the method according to any one of the first aspect and the possible designs of the first aspect is performed, or the method according to any one of the second aspect and the possible designs of the second aspect is performed.

According to a ninth aspect, an embodiment of this application provides a computer program product. When a computer reads and executes the computer program product, the computer is enabled to perform the method according to any one of the first aspect and the possible designs of the first aspect, or perform the method according to any one of the second aspect and the possible designs of the second aspect.

According to a tenth aspect, an embodiment of this application provides a chip, including a processor. The processor is coupled to a memory, and is configured to execute a computer program or instructions stored in the memory. When the computer program or the instructions are executed, the method according to any one of the first aspect and the possible designs of the first aspect is implemented, or the method according to any one of the second aspect and the possible designs of the second aspect is performed.

Based on the implementations provided in the foregoing aspects, embodiments of this application may be further combined to provide more implementations.

For technical effect that can be achieved in any possible implementation of any one of the third aspect to the tenth aspect, correspondingly refer to descriptions of the technical effect that can be achieved in any possible implementation of any one of the first aspect. No repeated description is provided.

### BRIEF DESCRIPTION OF DRAWINGS

FIG. 1 is a diagram of an application scenario to which an embodiment of this application is applicable;
FIG. 2 is a diagram of a system architecture to which an embodiment of this application is applicable;
FIG. 3 is a schematic flowchart of an intrusion detection method according to an embodiment of this application;
FIG. 4 is a diagram of a system architecture to which an embodiment of this application is applicable;
FIG. 5 is a diagram of a log collection principle according to an embodiment of this application;
FIG. 6 is a diagram of a generation principle of a detection rule set according to an embodiment of this application;
FIG. 7 is a diagram of a first interface according to an embodiment of this application;
FIG. 8 is a diagram of a second interface according to an embodiment of this application;
FIG. 9 is a schematic flowchart of an intrusion detection method in an OTA scenario according to an embodiment of this application;
FIG. 10 is a diagram of an attack in a Bluetooth key scenario according to an embodiment of this application;
FIG. 11 is a schematic flowchart of an intrusion detection method in a Bluetooth key scenario according to an embodiment of this application;
FIG. 12 is a diagram of a structure of a communication apparatus according to an embodiment of this application;
FIG. 13 is a diagram of a structure of a human machine interface according to an embodiment of this application; and
FIG. 14 is a diagram of a structure of a communication apparatus according to an embodiment of this application.

### DESCRIPTION OF EMBODIMENTS

For ease of understanding the technical solutions in embodiments of this application, the following first describes some related terms.

### 1. User

The "user" described in embodiments of this application is a person who uses a vehicle. The user may include a vehicle owner, or may include another person authorized by the vehicle owner to use the vehicle, for example, a relative or a friend of the vehicle owner. It should be understood that, for a driverless vehicle, the user may be a virtual user, or may be a real person who manages the vehicle. This is not limited in embodiments of this application.

### 2. User equipment

The user equipment is generally an electronic device used by a user, for example, a vehicle-mounted terminal of a vehicle used by the user or a smart terminal of the user, for example, a mobile phone or a tablet computer. For a driverless vehicle, the user equipment may be a vehicle-mounted terminal of the vehicle, or may be a mobile terminal placed on the vehicle, for example, a mobile phone or a tablet computer, or may be another electronic device associated with the vehicle, for example, an electronic device controlled by a vehicle administrator, including but not limited to a desktop computer, a notebook computer, a mobile phone, or a tablet computer. A product form of the user equipment is not limited in embodiments of this application.

### 3. Service node

The service node is generally a communication node configured to implement a service.

For example, the service may include an internet of vehicles service (or referred to as a vehicle service). The service node may include but is not limited to at least one of the following: a server, a smart terminal of a user, an application (application, APP) running on the smart terminal of the user, an electronic control unit (electronic control unit, ECU) inside a vehicle, and the like. Product forms or deployment manners of the service and the service node for implementing the service are not limited in embodiments of this application.

### 4. Run log

When running, a network device, a system, a service program, or the like generates an event record referred to as a log, namely, a run log. The run log is an ordered set of operations on a specified object and operation results of the operations by event. Content of the run log may be collected and recorded in a form of a log file, and may include a plurality of log lines. A date, time, an executor, and descriptions of a related operation like an action may be recorded in each log line.

In embodiments of this application, the run log is used to perform intrusion detection in terms of security. Therefore, the run log may also be referred to as a security log.

### 5. Intrusion event (or referred to as an attack event)

The intrusion event is an information security event in which an information system is attacked or intruded through a network or by another technical means by using a configuration defect, a protocol defect, or a program defect of the information system or through a violent attack, and consequentially the information system is abnormal or a potential hazard is caused to current running of the information system.

In embodiments of this application, the intrusion event is associated with a service. In a process of implementing the service, any point may be attacked. Therefore, a relationship between the service and the intrusion event may be one-to-many, that is, one service may relate to a plurality of intrusion events. Similarly, a same intrusion event may also occur in different services. Therefore, the relationship between the service and the intrusion event may alternatively be many-to-one, that is, one intrusion event may relate to a plurality of services. In some embodiments, the service may be further divided into a plurality of subservices, and each subservice may also relate to a plurality of intrusion events. A correspondence between the service and the intrusion event is not limited in embodiments of this application.

### 6. Detection rule

The detection rule is used to describe a method for detecting an intrusion event associated with a service. Generally, one detection rule corresponds to one intrusion event.

In embodiments of this application, a server may include detection rules for a plurality of intrusion events, and the detection rules are aggregated into a detection rule set. Each detection rule may be configured on the server in a manner of program code, or may be configured on the server in another form. An implementation of the detection rule is not limited in embodiments of this application.

For ease of differentiation, each to-be-used detection rule in the detection rule set may be referred to as a candidate detection rule, and a detection rule used to parse a run log is referred to as a target detection rule.

### 7. Detection field

The detection field is used to represent a feature of a potential intrusion attack behavior toward a service. For example, the detection field may include at least one of the following: a timestamp, a URL, and an operation identifier.

Embodiments of this application provide an intrusion detection method, an apparatus, and a system. A server can detect, by parsing run logs of at least two service nodes, whether an intrusion event occurs. From a service level, the method can be used to perform comprehensive intrusion detection on a service node related to a plurality of ends or a plurality of systems, without being limited to a single service node or system. This helps improve efficiency of detecting the intrusion event. The method and the apparatus are based on a same technical concept. Because a problem-resolving principle of the method is similar to a problem-resolving principle of the apparatus, for implementations of the apparatus and the method, refer to each other. No repeated description is provided.

It should be noted that the intrusion detection method in embodiments of this application may be applied to an internet of vehicles, for example, vehicle to everything (vehicle to everything, V2X), long term evolution-vehicle (long term evolution-vehicle, LTE-V), or vehicle to vehicle (vehicle to vehicle, V2V). For example, the intrusion detection method may be applied to a vehicle having a driving movement function, or another apparatus having the driving movement function in the vehicle. The another apparatus includes but is not limited to a vehicle-mounted terminal, a vehicle-mounted controller, a vehicle-mounted module, a vehicle-mounted assembly, a vehicle-mounted component, a vehicle-mounted chip, a vehicle-mounted unit, and another sensor like a vehicle-mounted radar or a vehicle-mounted camera. The vehicle may implement the method provided in embodiments of this application via the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera. Certainly, the control solution in embodiments of this application may be further applied to a smart terminal having a movement control function other than the vehicle, or configured on the smart terminal having the movement control function other than the vehicle, or configured on a component of the smart terminal. The smart terminal may be an intelligent transportation device, a smart home device, a robot, or the like. For example, the smart terminal includes but is not limited to a smart terminal, a controller in the smart terminal, a chip, another sensor like a radar or a camera, and another component.

It should be noted that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit priorities, or importance of the plurality of objects. For example, first user information and second user information are intended only to distinguish between user information obtained in different periods or in different manners, and do not indicate different content, priorities, or importance of the two pieces of user information.

For ease of understanding, the following provides descriptions with reference to the accompanying drawings and embodiments.

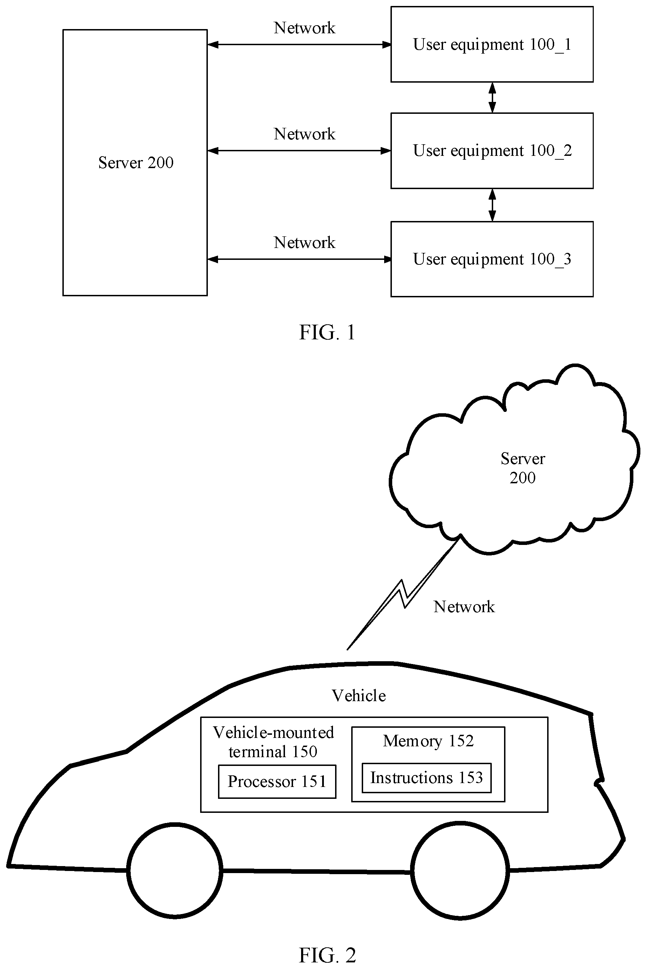

FIG. 1 is a diagram of an application scenario to which an embodiment of this application is applicable. In the application scenario, a server 200 and at least one user equipment (user equipment, UE) 100 (for example, user equipment 100_1 and user equipment 100_2) may be included. The server 200 and the at least one user equipment 100 may communicate with each other through a network. In an embodiment, the server 200 may alternatively be implemented by using a virtual machine.

For example, the at least one user equipment 100 may include a vehicle. As shown in FIG. 2, a part or all of functions of the vehicle are controlled by a vehicle-mounted terminal 150. The vehicle-mounted terminal 150 may include at least one processor 151. The processor 151 may execute instructions 153 stored in a non-transitory computer-readable medium like a memory 152. In some embodiments, the vehicle-mounted terminal 150 may alternatively be a plurality of computing devices that control individual components or subsystems of the vehicle in a distributed manner.

The processor 151 may be any conventional processor, for example, a central processing unit (central processing unit, CPU). Alternatively, the processor 151 may further include, for example, a graphics processing unit (graphics processing unit, GPU), a field programmable gate array (field programmable gate array, FPGA), a system-on-a-chip (system on chip, SOC), an application-specific integrated circuit (application-specific integrated circuit, ASIC), or a combination thereof.

In addition to the instructions 153, the memory 152 may further store data, for example, a road map, route information, a location, a direction, and a speed of the vehicle, other vehicle data, run logs of ECUs of the vehicle, and other information. The information may be used by the vehicle and the vehicle-mounted terminal 150 during operation of the vehicle in an autonomous mode, a semi-autonomous mode, and/or a manual mode. It should be understood that the structure of the vehicle in FIG. 2 should not be understood as a limitation on embodiments of this application.

In an optional implementation, the vehicle may be a car, a truck, a motorcycle, a bus, a boat, an airplane, a helicopter, a lawn mower, an entertainment vehicle, a playground vehicle, a construction device, a tram, a golf cart, a train, or the like. This is not particularly limited in embodiments of this application.

It should be noted that the vehicle-mounted terminal 150 shown in FIG. 2 is merely an example for describing an apparatus that is of the vehicle and that is configured to implement a computing function of the vehicle, and is not any limitation. The computing function may be implemented by an independent apparatus on the at least one user equipment 100, or may be implemented by the processor 151. This is not limited in embodiments of this application.

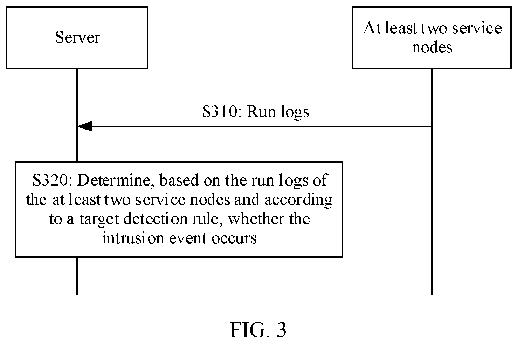

FIG. 3 is a schematic flowchart of an intrusion detection method according to an embodiment of this application. The method may be collaboratively implemented by the server and the at least one user equipment (for example, the vehicle) shown in FIG. 1 or FIG. 2. As shown in FIG. 3, the method may include the following steps.

S310: The server obtains run logs of at least two service nodes.

In this embodiment of this application, the at least two service nodes are communication nodes associated with a target service. The run log is an information record generated and collected by the service node in a process of implementing the target service, and is used to describe a service-related operation. Log content may include but is not limited to an operation identifier, a date or time at which the operation occurs, other information associated with the operation, and the like.

For example, the target service may include a vehicle service, and the at least two service nodes include the server, and a target vehicle or user equipment that is of a user and that is used to manage the target vehicle. It should be noted that the vehicle service described herein is a general term for an internet of vehicles service. The internet of vehicles service may include but is not limited to a service related to an OTA upgrade of a vehicle, for example, OTA content confirmation, OTA upgrade package download, OTA upgrade package installation, or OTA upgrade package activation, a vehicle Bluetooth key service, a vehicle remote control service, and the like. The service node configured to implement the target service may include at least one of the following: the server, an APP running on a smart terminal, an ECU inside the vehicle, and the like. The target service and the service node for implementing the target service are not limited in embodiments of this application.

The server may directly or indirectly perform communication interaction with the service node. When S310 is implemented, the server may obtain the run logs from the at least two service nodes in real time or cyclically. A manner of obtaining the run log may be that the service node actively reports the run log, or may be that the service node receives a request from the server and reports, to the server, the run log that the server requests to obtain. Alternatively, the manner of obtaining the run log may be that the server receives and stores the run logs from the at least two service nodes in real time or cyclically, and obtains a run log of a corresponding service node locally if necessary. The manner of obtaining the run log is not limited in embodiments of this application.

When the at least two service nodes send the run logs to the server, the run log from the service node may be carried in a communication message from the service node in a manner of a log file. For example, all log content recorded by the service node from a previous reporting moment to a current reporting moment (for example, the time interval may be referred to as a reporting cycle, and may be an equal time interval, or may be an unequal time interval) may be completely recorded in the log file, or a part of the recorded log content may be reported based on a pre-configuration or a negotiation. A transmission manner and content of the run log are not limited in embodiments of this application.

S320: The server determines, based on the run logs of the at least two service nodes and according to a target detection rule, whether the intrusion event occurs.

In this embodiment of this application, the target detection rule may be used to describe a method for detecting the intrusion event associated with the target service. When S320 is implemented, the server may parse the run logs of the at least two service nodes according to the target detection rule, to detect whether the intrusion event occurs.

In an optional implementation, before S320 is implemented, the server may obtain the target detection rule from a detection rule set based on the run log. The detection rule set may include candidate detection rules that are pre-configured for a plurality of potential intrusion attack behaviors toward different services. The candidate detection rule is used to describe a method for detecting an intrusion event corresponding to the potential intrusion attack behavior. The server may perform communication interaction with user equipment controlled by an administrator and receive configuration information. The configuration information may be used to modify the candidate detection rule in the detection rule set, and/or the configuration information may be used to newly add a candidate detection rule to the detection rule set. Each candidate detection rule may be stored on the server in a manner of program code, or may be stored on the server in another information form. This is not limited in embodiments of this application.

Generally, one candidate detection rule may correspond to one intrusion event. The candidate detection rule may include a rule that indicates a detection field of the intrusion event and at least one detection condition. The detection field may represent a feature of a potential intrusion attack behavior toward the service, and includes but is not limited to a timestamp, a uniform resource locator (uniform resource locator, URL), an operation identifier, or the like. The at least one detection condition may indicate the server to obtain target data from a to-be-parsed run log based on the detection field of the intrusion event, and determine, based on whether the run log and the target data meet the at least one detection condition, whether the intrusion event occurs.

For example, the target detection rule includes all the candidate detection rules in the detection rule set, or the target detection rule may include a candidate detection rule that is in the detection rule set and that is associated with the target service. The target detection rule may include a rule that indicates a detection field of the intrusion event and at least one detection condition. The detection field of the target detection rule represents a feature of a potential intrusion attack behavior toward the target service.

When S320 is implemented, the server may obtain target data from the run logs of the at least two service nodes based on the detection field indicated by the target detection rule, and the server may determine, based on whether the run log and the target data meet the at least one detection condition, whether the intrusion event occurs.

For example, based on content of the detection condition, the server may determine, when the run log and the target data meet all detection conditions in the at least one detection condition, that the intrusion event does not occur, or determine, when the run log and the target data do not meet any detection condition in the at least one detection condition, that the intrusion event occurs. Alternatively, for example, based on the content of the detection condition, the server may determine, when the run log and the target data meet all the detection conditions in the at least one detection condition, that the intrusion event occurs, or determine, when the run log and the target data do not meet any detection condition in the at least one detection condition, that the intrusion event does not occur.

For example, the detection field of the intrusion event indicated by the target detection rule includes a timestamp. The target data may include a time value corresponding to the timestamp. If the detection condition indicated by the target detection rule includes that a difference between time values obtained from the run logs of the at least two service nodes is less than or equal to a first threshold, when parsing the run log according to the target detection rule, the server may determine, when the difference between the time values obtained from the run logs of the at least two service nodes is less than or equal to the first threshold, that is, the detection condition is met, that the intrusion event does not occur, or determine, when the difference between the time values obtained from the run logs of the at least two service nodes is greater than the first threshold, that is, the detection condition is not met, that the intrusion event occurs. If the detection condition indicated by the target detection rule includes that the difference between the time values obtained from the run logs of the at least two service nodes is greater than or equal to a second threshold, where the second threshold is greater than or equal to the first threshold, when parsing the run log according to the target detection rule, the server may determine, when the difference between the time values obtained from the run logs of the at least two service nodes is greater than or equal to the second threshold, that is, the detection condition is met, that the intrusion event occurs, or determine, when the difference between the time values obtained from at least two run logs is less than the second threshold, that is, the detection condition is not met, that the intrusion event does not occur.

Similarly, for example, the detection field of the intrusion event indicated by the target detection rule includes a URL. The target data may include URL data. If the detection condition indicated by the target detection rule includes that content of URL data obtained from the run logs of the at least two service nodes is the same, when parsing the run log according to the target detection rule, the server may determine, when the content of the URL data obtained from the run logs of the at least two service nodes is the same, that is, the detection condition is met, that the intrusion event does not occur, or determine, when the content of the URL data obtained from the at least two service nodes is different, that is, the detection condition is not met, that the intrusion event occurs. If the detection condition indicated by the target detection rule includes that the content of the URL data obtained from the run logs of the at least two service nodes is different, when parsing the run log according to the target detection rule, the server may determine, when the content of the URL data obtained from the run logs of the at least two service nodes is different, that is, the detection condition is met, that the intrusion event occurs, or determine, when the content of the URL data obtained from the run logs of the at least two service nodes is the same, that is, the detection condition is not met, that the intrusion event does not occur.

Similarly, for example, the detection field of the intrusion event indicated by the target detection rule includes an operation identifier. The operation identifier may be associated with execution of an operation included in the target service. The target data may include data corresponding to the operation identifier. If the detection condition indicated by the target detection rule includes that content of data corresponding to operation identifiers obtained from the run logs of the at least two service nodes is the same, when parsing the run log according to the target detection rule, the server may determine, when the content of the data corresponding to the operation identifiers obtained from the run logs of the at least two service nodes is the same, that is, the detection condition is met, that the intrusion event does not occur, or determine, when the content of the data corresponding to the operation identifiers obtained from the at least two service nodes is different, that is, the detection condition is not met, that the intrusion event occurs. If the detection condition indicated by the target detection rule includes that the content of the data corresponding to the operation identifiers obtained from the run logs of the at least two service nodes is different, when parsing the run log according to the target detection rule, the server may determine, when the content of the data corresponding to the operation identifiers obtained from the run logs of the at least two service nodes is different, that is, the detection condition is met, that the intrusion event occurs, or determine, when the content of the data corresponding to the operation identifiers obtained from the run logs of the at least two service nodes is the same, that is, the detection condition is not met, that the intrusion event does not occur.

It should be noted that the foregoing is merely example descriptions of the detection field and the detection condition that are indicated by the target detection rule. In a specific embodiment, content of the detection field specifically indicated by the target detection rule is not limited, and content and a quantity of detection conditions indicated by the target detection rule are not limited either. Details are not described herein again.

In an optional implementation, the server may further output a detection result of the intrusion event. Specifically, for example, the server may be associated with an output device, and the server may output the detection result of the intrusion event via the output device. For example, the detection result may include at least one of the following information of the intrusion event: an event identifier, an event name, a threat level, detection time, a potential risk, an intrusion attack object, an intrusion detection procedure, or intrusion detection context information. A frontend user may view related information of the intrusion event via a display interface of the output device. If necessary, the frontend user may perform confirmation, attack source tracing, and the like on the intrusion event by using the presented information.

For ease of understanding, the following describes specific implementation details of embodiments of this application by using an example of application to an internet of vehicles scenario.

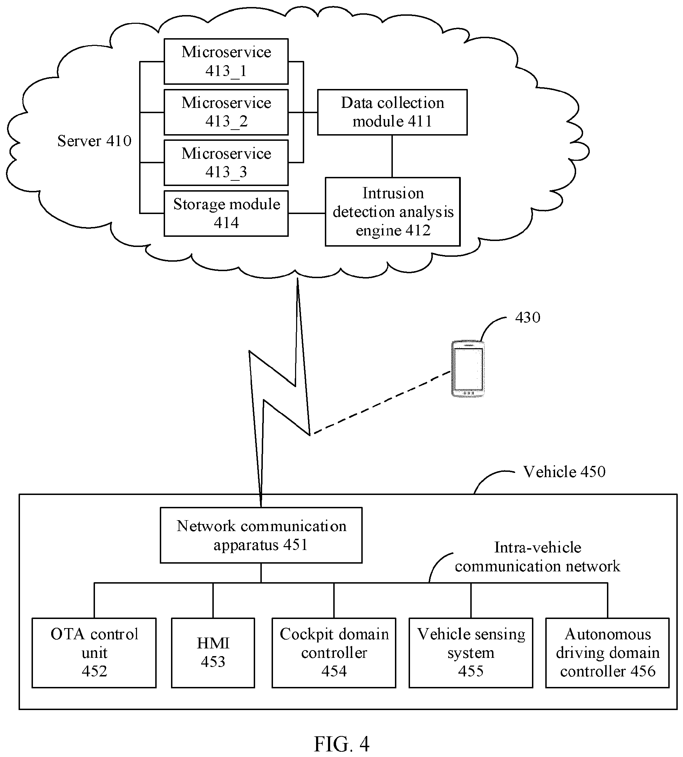

FIG. 4 is a diagram of a system architecture applied to the internet of vehicles scenario according to an embodiment of this application. For example, the user equipment in FIG. 1 includes the vehicle in FIG. 2 or a smart terminal of a user. Refer to FIG. 4. In the scenario, a server 410 may perform communication interaction with a vehicle 450 and a smart terminal 430 of a user through a wireless network, to implement the intrusion detection method in embodiments of this application.

The following describes functional modules in a system.

### 1. Vehicle 450

For example, the vehicle 450 may include a plurality of ECUs, for example, a network communication apparatus 451, an OTA control unit 452, a human machine interface HMI 453, a cockpit domain controller 454, a vehicle sensing system 455 or an autonomous driving domain controller 456, and an intra-vehicle communication network (for example, a CAN bus) used to implement intra-vehicle communication. The network communication apparatus 451 may be used as a communication bridge between an internal ECU of the vehicle 450 and an external device like the server 410 or the smart terminal 430, to implement a capability like sending, receiving, or forwarding a run log. Inside the vehicle 450, for example, the network communication apparatus 451 may communicate information with each ECU of the vehicle 450 through the intra-vehicle communication network. In this embodiment of this application, the network communication apparatus 451 may support a wireless communication manner or a wired communication manner. This is not limited in embodiments of this application.

Each ECU may be used as a service node, and may record and store a run log in a run process.

For example, the OTA control unit 452 may be used as a unit module for implementing OTA upgrade control inside the vehicle 450, and may execute an operation related to an OTA upgrade service. For example, the OTA control unit 452 may receive OTA content and an OTA upgrade package from the server 410 via the network communication apparatus 451. Alternatively, the OTA control unit 452 may further install the OTA upgrade package and activate the OTA upgrade package. Alternatively, the OTA control unit 452 may feed back an operation result to the server 410 via the network communication apparatus 451. In a process in which the OTA control unit 452 runs and implements a corresponding service, the OTA control unit 452 may synchronously record and store a run log. For example, the run log may include information for describing an execution detail of the operation related to the OTA upgrade service, for example, an execution date, execution time, an executor, an operation identifier, operation content, and other associated information.

For example, the HMI 453 is an input/output device in the vehicle 450. The HMI 453 may communicate with the network communication apparatus 451, the OTA control unit 452, the cockpit domain controller 454, the vehicle sensing system 455, or the autonomous driving domain controller 456 through the intra-vehicle communication network, and may provide an operation interface, configured to output information from the network communication apparatus 451, the OTA control unit 452, the cockpit domain controller 454, the vehicle sensing system 455, or the autonomous driving domain controller 456, or configured to receive information that is input by the user via the HMI 453, or send the received input information to a corresponding ECU or the server. In a process in which the HMI 453 runs and implements a corresponding service, the HMI 453 may synchronously record and store a run log. For example, the run log may include content, a date, time, an operation identifier, and other associated information of the output information, or include content, a date, time, an operation identifier, and other associated information of the input information.

For example, the cockpit domain controller 454 may obtain sufficient perception data, for example, intra-vehicle vision (optics), a voice (acoustics), and data of a chassis and a vehicle body, such as a steering wheel, a brake pedal, a throttle pedal, a gear, and a safety belt, via an independent perception layer, comprehensively determine a physiological status (portrait and face recognition) and a behavior status (a driving behavior, a sound, and a body behavior) of a driver (or another passenger) by using a biometric recognition technology (mainly, face recognition and sound recognition in a cockpit), and then push an interaction request based on a specific scenario. An intra-vehicle interaction mode is upgraded from sole "physical button interaction" to "touchscreen interaction", "voice interaction", and "gesture interaction" that coexist. In a process of running and implementing a corresponding service, the cockpit domain controller 454 may synchronously record and store a run log. For example, the run log may include dates, time, operation identifiers, operation content, and other associated information for obtaining various types of perception data, or may include content, a date, time, an operation identifier, and other associated information for pushing the interaction request in the specific scenario.

For example, the vehicle sensing system 455 may include sensor components such as a camera, a radar, a thermometer, and a hygrometer. The vehicle sensing system 455 may obtain a perception result of an intra-vehicle environment or an extra-vehicle environment through perception, and provide the perception result to the cockpit domain controller 454 or another ECU that needs the information, for example, the autonomous driving domain controller 456. Similarly, the vehicle sensing system 455 may record a run log of each sensor component, for example, content, a generation date, time, an operation identifier, and other associated information of perception information.

For example, the autonomous driving domain controller 456 may make an autonomous driving decision and implement autonomous driving control, for example, adaptive cruise control, automatic emergency braking control, lane keeping assist control, lane departure warning control, or parking assist control, based on various collected perception results. In a process of running and implementing a corresponding service, the autonomous driving domain controller 456 may synchronously record and store a run log. The run log may include operation identifiers, content, dates, time, other associated information, or the like related to different autonomous driving function operations.

If necessary, each of the foregoing vehicle ECUs may report the stored run log to the server 410, and the server 410 may parse collected run logs from at least two service nodes, to determine whether an intrusion event occurs.

It should be noted that, in this embodiment of this application, each ECU shown in FIG. 4 may be used as a service node for an internet of vehicles service, to provide the run log of the ECU to the server 410. Run logs generated by different ECUs in processes of implementing respective services may include different content. The content of the run log is not limited in embodiments of this application. In another optional embodiment, a data collection module may be further integrated into the network communication apparatus 451. The data collection module may obtain a required run log from each ECU of the vehicle 450 and report the run log to the server. To reduce impact on the internet of vehicles service implemented by the server 410, in an optional implementation, a run log transmission channel between the server 410 and the vehicle 450 may be an independent channel, and is independent of a service transmission channel between the server 410 and the vehicle 450. A manner of run log transmission between the server 410 and the vehicle 450 is not limited in embodiments of this application.

It should be understood that FIG. 4 is merely example descriptions of the ECUs in the vehicle 450, and is not any limitation. In another embodiment, the vehicle 450 may further include another ECU that is not shown, for example, a power domain controller or a chassis domain controller. Details are not described herein again.

### 2. Smart terminal 430

The smart terminal 430 may communicate with the server 410 and the network communication apparatus 451 of the vehicle 450 through a mobile network. An application (application, APP) may be installed and run on the smart terminal 430. For example, the APP may be used as a service node. In a run process of the APP, the APP may implement vehicle management through communication interaction with the server 410 or the vehicle 450. Similarly, in the run process, the APP may also synchronously record and store a run log. For example, the run log may include an operation identifier, operation content, a date, time, or other associated information related to information about or an operation of the user, the server 410, or the vehicle 450.

During specific implementation, a data collection module of the smart terminal 430 may be packaged, in a form of a software development kit (software development kit, SDK), in the APP for managing the vehicle, and may be configured to: collect the run log of the APP and report the run log of the APP to the server 410.

### 3. Server 410

The server 410 may include a data collection module 411, an intrusion detection analysis engine 412, a storage module 414, and at least one microservice, for example, represented as a microservice 413_1, a microservice 413_2, or a microservice 413_3.

### (1) Microservice

Different microservices are respectively used as service nodes, and may be used to provide different internet of vehicles services to the vehicle 450. For example, the microservice 413_1 may provide the OTA upgrade service, the microservice 413_2 may provide a vehicle remote control service, and the microservice 413_3 may provide a vehicle Bluetooth key service. Each microservice generates and stores a corresponding run log in a run process. Log content may be different based on different services. Details are not described herein again.

### (2) Data collection module 411

The data collection module 411 may collect run logs from a plurality of ends (for example, the at least two service nodes). For example, the data collection module 411 may collect run logs from different microservices by invoking an interface of each microservice. Alternatively, for example, the data collection module 411 may collect a run log from the smart terminal 430 or each ECU of the vehicle 450 through the wireless network.

In an optional implementation, the data collection module 411 may perform data cleaning and aggregation on collected multi-end log data, and uniformly classify and store, in a unified manner based on a vehicle dimension, log data from a same vehicle, a same vehicle owner APP, and a corresponding microservice.

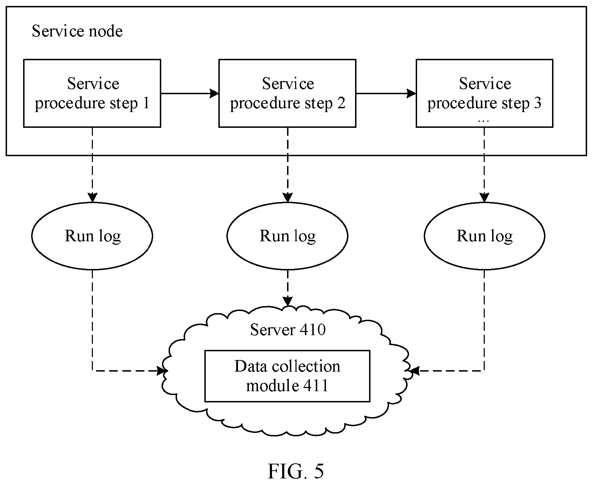

It should be noted that, in this embodiment of this application, for any service node, a service procedure of the service node may include at least one step, for example, represented as a step 1, a step 2, a step 3.... A data collection module located in the service node may record content of a run log in each step of the service procedure, and if necessary, provide collected log data to the data collection module 411 of the server 410 through a corresponding data collection channel, as shown in FIG. 5.

It should be noted that, in FIG. 5, a dashed-line arrow represents a data collection channel between the service node and the data collection module 411 of the server 410. The data collection channel may be an independent channel, and is decoupled from a normal service procedure, that is, the log data of the service node is collected without special adaptation and perception of a normal service.

### (3) Intrusion detection analysis engine 412

The intrusion detection analysis engine 412 may perform unified analysis on log data from all ends of each vehicle, and identify, according to a method for matching the log data and a candidate detection rule in a preset detection rule set, whether an intrusion detection event occurs.

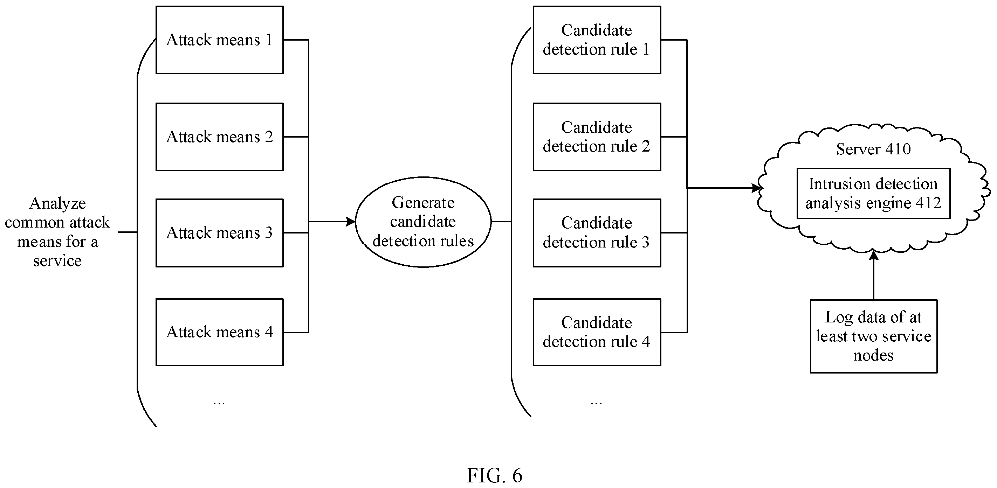

During specific implementation, as shown in FIG. 6, before intrusion detection is initiated, common attack means (or referred to as intrusion attack behaviors) may be first analyzed for a service, for example, represented as an attack means 1, an attack means 2, an attack means 3, an attack means 4.... Corresponding detection rules may be generated for different attack means, for example, represented as a candidate detection rule 1, a candidate detection rule 2, a candidate detection rule 3, a candidate detection rule 4.... Candidate detection rules generated for different services may be aggregated into a detection rule set that is set in the intrusion detection analysis engine 412, or is set in a storage module (which may be the same as or different from the storage module 414) that can be accessed by the intrusion detection analysis engine 412. In an optional implementation, the intrusion detection analysis engine 412 may provide a configuration interface. The configuration interface may be configured to receive configuration information. The configuration information may be used to modify the candidate detection rule in the detection rule set, and/or the configuration information may be used to newly add a candidate detection rule to the detection rule set.

It should be noted that, in this embodiment of this application, identification of the attack means and generation of the candidate detection rule may be manually implemented, or may be implemented by using a model (for example, a machine model or a learning model). This is not limited in embodiments of this application. Each candidate detection rule may be implemented in a manner of program code, or may be implemented in another product form. This is not limited in embodiments of this application. Before being put into use, all the candidate detection rules in the detection rule set have been tested, and meet various conditions that need to be met by a detection rule. Details are not described herein again.

When intrusion detection is initiated, the intrusion detection analysis engine 412 of the server 410 may perform traversal matching on all or a part of the set-in candidate detection rules (referred to as a target detection rule) based on log data that is of at least two service nodes and that is obtained for a same vehicle, to determine whether an intrusion event occurs.

It should be noted that, in this embodiment of this application, a function of aggregating the multi-end log data may also be integrated into the intrusion detection analysis engine 412. This is not limited in embodiments of this application. When intrusion detection is performed, the intrusion detection analysis engine 412 needs only to determine, according to a target detection rule obtained through traversal, whether required target data can be extracted from all the log data and whether the extracted target data matches, to determine whether an intrusion event corresponding to the target detection rule occurs.

For example, a correspondence among the intrusion event, a method for detecting the intrusion event, and a related log line may be shown as follows.

### Intrusion event A

Intrusion event name: Time of delivery by an OTA microservice is inconsistent with time locally updated on the vehicle, and a system may be locally flashed on the vehicle.

### Threat level: medium risk

Potential risk: In an initial phase of an OTA procedure, the OTA microservice delivers update related information to the vehicle, and after receiving the related information, the vehicle starts to perform the OTA procedure. In an actual environment, time when the OTA microservice delivers a message needs to be synchronized with time when the vehicle receives the message, and if it is found that a difference between the time when the OTA microservice delivers the message and the time when the vehicle receives the message is excessively large, it is quite possible that vehicle-cloud communication is hijacked by an attacker, and the attacker performs an attack by an attack means like replay.

### Detection method

(1) Detect, in the run log of the vehicle, a log line including the following field: a task identifier (task Id) (for example, the task identifier is an example of an operation identifier).
(2) Extract the task Id 345607472024893440 from the log line.
(3) Detect, below the log line, a log line including the following field: begin call Vdc ua proxy InformDCUrl interface.
(4) Extract a time value 1652258444029 corresponding to a timestamp (timestamp) in the log line.
(5) Detect, in a run log of the OTA microservice, that task Id should match a plurality of lines (if the plurality of lines do not exist, directly detect an intrusion threat), and find a 1^{st} line of the plurality of lines to extract a time value 1652258443625 corresponding to occurrence time (occur time).
(6) Compare the two time values. If a time difference is greater than 1 hour, the system may be attacked.

### Related log lines:

2022-05-11 16:40:42.856|2817414160|OTAManager|INFO|Task Id: 345607472024893440|OTATaskObjectHolder.cpp|189
2022-05-11 16:40:44.030|2775450640|OTAManager|INFO|begin call Vdc ua proxy InformDCUrl interface, request is: {requestBase: {taskId: 345607472024893440, timestamp: 1652258444029}, dcCluster: [{url: https://cdn.fgaif1.ias.huawei.com/*****5_SW%253A1.01.C_220429_2225_00.zip, size: 41050, isRollBack: false}]}.|[UAProxyLogPrintWrapper.cpp|44
2022-05-11 08:40:43.625|[null]|transport-vert.x-eventloop-thread-2|INFO |LogProducerServiceImpl.java:49|send log LogModel(vehicleTaskId=345607472024893440, occurTime=1652258443625, stage=DISPATCH, event=51, executor=0, result=null, formatArgs=null, errorInfo={id:345607472024893440,type:0,policy:TaskPolicy(taskType=NORMAL, executeType=null, executeDateTime=null, promptDownload=N, downloadMethod=null, failedAction=STOP, retryTimes=0, flashTtl=300, otaScope=3, rescuePolicy=null),dpPackage:{"pkgId": "341274703425512448","vin":"FI790********0168","packageInfos":DpPackageForDispatch.P ackageInfo(version=v1.0, dcPackages=[{"domain": "4","path":"https://cdn.fgaif1.ias.huawei.com/2022/04/29/1651225361442/TBOX_7900010-SY01-2225_SW%253A1.01.C_220429_2225_00.zip","unzipSize":41050,"zipSize":41050,"rollback":0 }], ecus=[DpPackageForDispatch.Ecu(domain=4, ecuId=7900010-SY01-2225, clay=1, partition=1, tc=20, nodeAddr=0x1728, srcVersion=DpPackageForDispatch.VersionInfo(software=[DpPackageForDispatch.Software(id= soft, version=SW:1.01.C_220429_2225_00)]), destVersion=DpPackageForDispatch.VersionInfo(software=[DpPackageForDispatch.Software(id =soft, version=SW:1.01.C_220429_2225_00)]), supportOta=false)], ruleInfo=DpPackageForDispatch.RuleInfo(version=1, rule={"pre_install":{"opr":7,"elms":[{"opr":7,"sub_elms":[{"var":"obd","opr":1,"val":"n"},{"var ":"chargingState","opr":9,"val":"0,1"}]}]}}), upgradeOrder=DpPackageForDispatch.ComposeOrdersInner(install=DpPackageForDispatch.Co mposeOrderInner(stages=[DpPackageForDispatch. ComposeStageInner(voltageType=1, kl15=null, orderSegments=null, orderNodeAddr=[[0x1728, 0x1728]])]), rollback=DpPackageForDispatch.ComposeOrderInner(stages=[DpPackageForDispatch.Compos eStageInner(voltageType=1, kl15=null, orderSegments=null, orderNodeAddr=[[0x1728, 0x1728]])]), active=DpPackageForDispatch.ComposeOrderInner(stages=[])), supportingEcus=[]), "issueD ate" : 1651225430000, "upgradeDuration":20} ,edition: {"revno" : null, " prettyVersion":"SW1.01.C_220429_2225_00","issueDate":1651225430000,"releaseNotes":[{"la ng":"ZH","releaseNote":"release 18 sample submission"}],"size":41050},supportingEcus:null}). caller class: com.huawei.ivcs.ota.scheduler.task.processor.impl.DispatchProcessor, line: 790.

### Intrusion event B

Intrusion event name: An OTA download link is replaced.

### Threat level: high risk

Potential risk: In an initial phase of an OTA procedure, an OTA microservice delivers update related information to the vehicle, and after receiving the related information, the vehicle starts to perform the OTA procedure. In an actual environment, a download link in a message delivered by the OTA microservice needs to be the same as a download link in the message received by the vehicle, and if it is found that the two links are different, it is quite possible that the download link has been hijacked and replaced by an attacker.

### Detection method

(1) Detect, in the run log of the vehicle, a log line including the following field: begin call Vdc ua proxy InformDCUrl interface.
(2) Extract, from the log line, a download link that is of an upgrade package and that is received by the vehicle:
   https://cdn.fgaif1.ias.huawei.com/*****5_SW%253A1.01.C_220429_2225_00.zip
(3) Extract a task Id 345607472024893440 of an OTA task from the line.
(4) Detect the following field dcPackages in a run log of the OTA microservice. A plurality of fields should be detected.
(5) Use the task Id to obtain two lines of records through filtering (if the two lines of records are not detected, directly detect an intrusion threat), and select a 1^{st} line to extract a download URL in the line:
   https://cdn.fgaif1.ias.huawei.com/2022/04/29/1651225361442/TBOX_7900010-SY01-2225_SW%253A1.01.C_220429_2225_00.zip
(6) Split a URL, detected by the vehicle, into the front half and the rear half: https://cdn.fgaif1.ias.huawei.com/ and 5_SW%253A1.01.C_220429_2225_00.zip.
(7) Match URL links of the vehicle and the OTA microservice to determine whether content of the two URL links is the same.

### Related log lines:

2022-05-11 16:40:44.030|2775450640|OTAManager|INFO|begin call Vdc ua proxy InformDCUrl interface, request is: {requestBase: {taskId: 345607472024893440, timestamp: 1652258444029}, dcCluster: [{url: https://cdn.fgaif1.ias.huawei.com/*****5_SW%253A1.01.C_220429_2225_00.zip, size: 41050, isRollBack: false}]}.|[UAProxyLogPrintWrapper.cpp|44
2022-05-11 08:40:43.625|[null]|transport-vert.x-eventloop-thread-2|INFO |LogProducerServiceImpl.java:49|send log LogModel(vehicleTaskId=345607472024893440, occurTime=1652258443625, stage=DISPATCH, event=51, executor=0, result=null, formatArgs=null, errorInfo={id:345607472024893440,type:0,policy:TaskPolicy(taskType=NORMAL, executeType=null, executeDateTime=null, promptDownload=N, downloadMethod=null, failedAction=STOP, retryTimes=0, flashTtl=300, otaScope=3, rescuePolicy=null),dpPackage: {"pkgId": "341274703425512448","vin":"F1790********0168","packageInfos":DpPackageForDispatch.P ackageInfo(version=v1.0, dcPackages=[{"domain": "4""path":"https://cdn.fgaif1.ias.huawei.com/2022/04/29/1651225361442/TBOX_7900010-SY01-2225_SW%253A1.01.C_220429_2225_00.zip","unzipSize":41050,"zipSize":41050,"rollback":0 }], ecus=[DpPackageForDispatch.Ecu(domain=4, ecuId=7900010-SY01-2225, clay=1, partition=1, tc=20, nodeAddr=0x1728, srcVersion=DpPackageForDispatch.VersionInfo(software=[DpPackageForDispatch.Software(id= soft, version=SW:1.01.C_220429_2225_00)]), destVersion=DpPackageForDispatch.VersionInfo(software=[DpPackageForDispatch.Software(id =soft, version=SW:1.01.C_220429_2225_00)]), supportOta=false)], ruleInfo=DpPackageForDispatch.RuleInfo(version=1, rule={"pre_install":{"opr":7,"elms":[{"opr":7,"sub_elms":[{"var":"obd","opr":1,"val":"n"},{"var ":"chargingState","opr":9,"val":"0,1"}]}]}}), upgradeOrder=DpPackageForDispatch.ComposeOrdersInner(install=DpPackageForDispatch.Co mposeOrderInner(stages=[DpPackageForDispatch. ComposeStageInner(voltageType=1, kl15=null, orderSegments=null, orderNodeAddr=[[0x1728, 0x1728]])]), rollback=DpPackageForDispatch.ComposeOrderInner(stages=[DpPackageForDispatch.Compos eStageInner(voltageType=1, kl15=null, orderSegments=null, orderNodeAddr=[[0x1728, 0x1728]])]), active=DpPackageForDispatch.ComposeOrderInner(stages=[])), supportingEcus=[]), "issueD ate" : 1651225430000, "upgradeDuration":20} ,edition: {"revno" : null, " prettyVersion":"SW1.01.C_220429_2225_00","issueDate":1651225430000,"releaseNotes":[{"la ng":"ZH","releaseNote":"release 18 sample submission"}],"size":41050},supportingEcus:null}). caller class: com.huawei.ivcs.ota.scheduler.task.processor.impl.DispatchProcessor, line: 790.

It should be noted that the foregoing is example descriptions of a correspondence between the instruction event and the method for detecting the intrusion event by using the intrusion event A and the intrusion event B as examples, and is not any limitation. In another embodiment, a corresponding detection rule further needs to be generated with reference to a specific attack means that may be related to the intrusion event, to subsequently detect the intrusion event according to the detection rule. Details are not described herein again.

### (4) Storage module 414

The storage module 414 may be configured to store detection results of different intrusion events of different vehicles, and may classify and store all the intrusion events.

In an optional implementation, the storage module 414 may be further associated with an output device. For example, an HMI of the output device may obtain a detection result of a related event from the storage module 414 and output the detection result, for a frontend user to perform event confirmation, intrusion source tracing, emergency response, and the like on the related event.

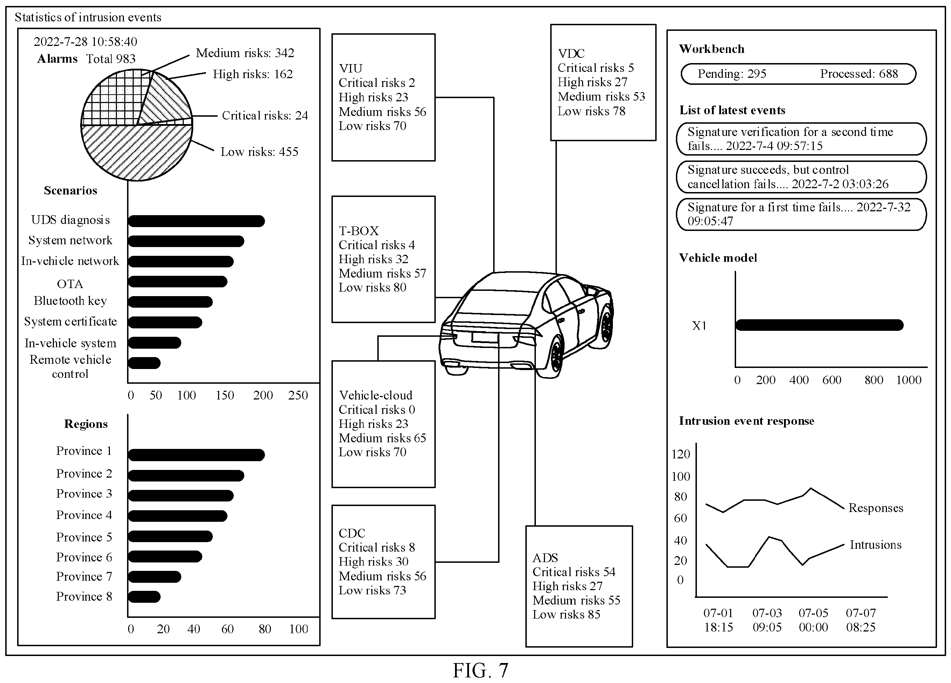

Specifically, for example, on the HMI associated with the storage module 414, a first interface shown in FIG. 7 may be output. The first interface may be used to present, from at least one dimension, a statistical result of intrusion events that occur until a moment (for example, 2022-7-28 10:58:40).

For example, the at least one dimension may include an alarm dimension, for example, threat level classifications of the intrusion events: a low risk, a medium risk, a high risk, and a critical risk; a total quantity of the intrusion events; and quantities of intrusion events corresponding to threat levels, for example, 455 low-risk events, 342 medium-risk events, 162 high-risk events, and 24 critical-risk events.

Alternatively, for example, the at least one dimension may include a scenario dimension, including but not limited to at least one of the following: a unified diagnostic services (unified diagnostic services, UDS) diagnosis scenario, a system network scenario, an in-vehicle network scenario, an OTA scenario, a Bluetooth key scenario, a system certificate scenario, an in-vehicle system scenario, and a remote vehicle control scenario. The statistical result may include quantities of intrusion events in different scenarios. As shown in FIG. 7, a horizontal coordinate may represent a statistical quantity of intrusion events, and a vertical coordinate may represent a scenario.

Alternatively, for example, the at least one dimension may include a region dimension, including but not limited to regions obtained through division at different granularities such as a province/municipality, a city, a county, and a district. As shown in FIG. 7, regions obtained through division by province are used as an example. Vertical coordinates represent identifiers of provinces (for example, represented as a province 1, a province 2, ..., and a province 8), and horizontal coordinates represent statistical quantities of intrusion events occurring in different provinces.

Alternatively, for example, the at least one dimension may include a vehicle model dimension, for example, represented as X1. As shown in FIG. 7, a vertical coordinate may represent a vehicle model, and a horizontal coordinate may represent a statistical quantity of intrusion events related to the vehicle model.

Alternatively, for example, the at least one dimension may include an intrusion event response dimension. As shown in FIG. 7, a horizontal coordinate represents time (for example, occurrence time of an intrusion event or processing time of an intrusion event response), and a horizontal coordinate represents a quantity of intrusion events or a quantity of intrusion event responses that occur in a corresponding time interval.

Alternatively, the at least one dimension may include a vehicle ECU dimension, for example, a vehicle identification unit (vehicle identification unit, VIU), vehicle dynamics control (vehicle dynamics control, VDC), continuous damping control (continuous damping control, CDC), a telematics-box (telematics-box, TBOX), or vehicle-cloud communication. As shown in FIG. 7, the first interface may further output quantities of intrusion events of different threat levels related to each ECU. It should be understood that, in FIG. 7, statistical results presented for different ECUs may be further connected to corresponding locations in the vehicle. Details are not described herein again.

Alternatively, the at least one dimension may include a workbench dimension. The workbench dimension may present a quantity (for example, 688) of processed intrusion events, a quantity (for example, 295) of pending intrusion events, and a list of latest events. The list of latest events may present a latest intrusion event and occurrence time of the event.

For the statistical result presented from the at least one dimension in FIG. 7, the frontend user may select a specific item via a mouse or in another input manner, so that the first interface shown in FIG. 7 may jump to a second interface (or the first interface and the second interface are displayed in parallel). The second interface may present information details of the selected specific item at a finer granularity.

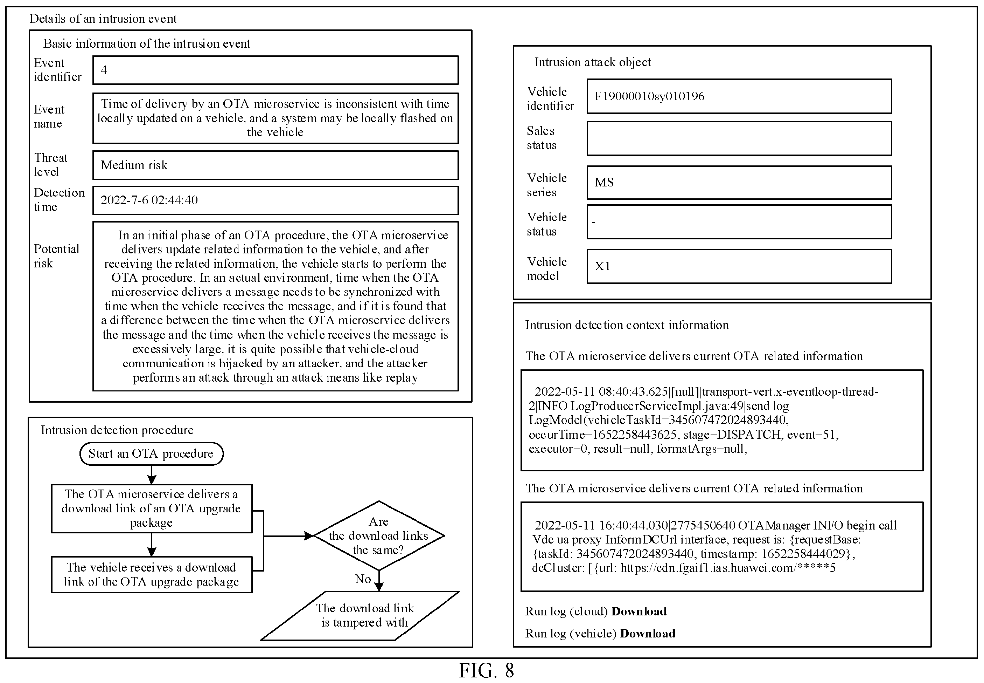

For example, the frontend user selects an event in the "list of latest events". The HMI of the output device may receive control information that is input on the first interface. The control information indicates to output an intrusion detection result of a target intrusion event. Correspondingly, the second interface shown in FIG. 8 is presented on the HMI of the output device. The second interface outputs the intrusion detection result of the target intrusion event, including detailed content of at least one of the following information: an event identifier, an event name, a threat level, detection time, a potential risk, an intrusion attack object, an intrusion detection procedure, or intrusion detection context information.

In an optional implementation, an input box may be further presented in FIG. 8. The input box may be used by the frontend user to input or select confirmation information or a processing method for the intrusion event. Correspondingly, the HMI may receive second indication information that is input in response to the intrusion detection result. The second indication information is used to determine the intrusion event or indicates the method for processing the intrusion event. Methods for processing different intrusion events are different. This is not limited in embodiments of this application.

Therefore, the output device can quite conveniently present the detection result and related context of the intrusion event, so that after viewing the information, the frontend user performs confirmation, response, attack source tracing, and the like on the intrusion event in time.

So far, the system architecture in this embodiment of this application has been described in detail with reference to the accompanying drawings and embodiments. As an intrusion detection end, the server can collect run logs from at least two service nodes for implementing a target service, and parse collected log data, to detect whether an intrusion event exists on each service node or in network communication or the like between the service nodes. From a service level, the server can perform comprehensive intrusion detection on a service node related to the plurality of ends or a plurality of systems, without being limited to a single service node. This helps improve efficiency of detecting the intrusion event. In addition, the output device associated with the server can output the statistical result of the intrusion events from the at least one dimension, so that the frontend user (for example, a security expert) performs confirmation, source tracing, response, or the like on the intrusion event in time based on the presented information.

For ease of understanding, the following describes the intrusion detection method in embodiments of this application with reference to an OTA scenario and a Bluetooth key scenario.

### 1. OTA scenario

In the field of intelligent connected vehicles, OTA has become a standard configuration technology. Each ECU of the vehicle may download an OTA upgrade package from an OTA microservice of a server by using an OTA function, to update a system of the ECU, so as to obtain a new function or install a patch for the system, thereby improving system security. In addition to bringing convenience to the intelligent connected vehicles, the OTA function also becomes one of main attack points of an attacker. A common attack manner is to hijack communication between the vehicle and a cloud, and replace a download link of the OTA upgrade package, so as to flush a malicious system into the vehicle ECU. Therefore, security detection needs to be performed on an intrusion event corresponding to the attack means.

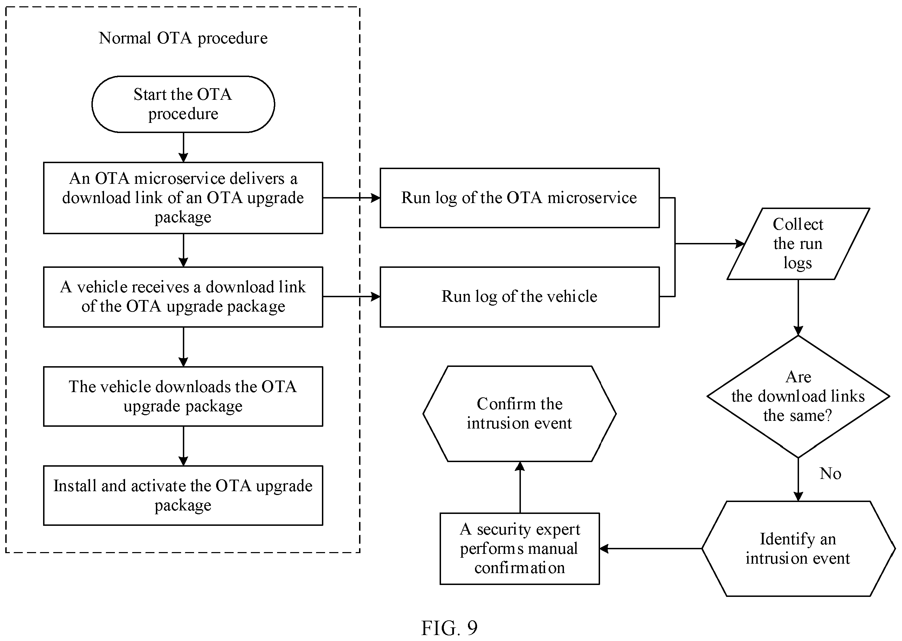

As shown in FIG. 9, in the OTA scenario, when the vehicle and the OTA microservice perform a normal OTA procedure, service nodes relate to the vehicle ECU and the OTA microservice of the server. Steps related to the service procedure may include: The OTA microservice delivers the download link of the OTA upgrade package. Correspondingly, the vehicle receives a download link of the OTA upgrade package. The vehicle downloads the OTA upgrade package. The vehicle installs and activates the OTA upgrade package.

According to the intrusion detection method in embodiments of this application, in a process in which the vehicle ECU or the OTA microservice implements a corresponding service step, a data collection module of the vehicle ECU or the OTA microservice may collect a run log. A data collection module of the server may collect the run log from the data collection module of the vehicle ECU or the OTA microservice and provide collected log data to an intrusion detection analysis engine. The intrusion detection analysis engine may perform traversal matching on a part or all of candidate detection rules in a set-in detection rule set based on the obtained log data. According to a target detection rule obtained through matching, the intrusion detection analysis engine may extract target data (for example, the download link of the OTA upgrade package) from a related run log, and perform matching on content of the extracted target data. If the target data does not meet a corresponding detection condition (for example, URL content is the same), it is identified that the intrusion event occurs. Further, a detection result or log context of the intrusion event may be output on a frontend HMI of the server, and a frontend user (for example, a security expert) may perform confirmation on the intrusion event. After the security expert performs manual confirmation, the intrusion event is confirmed. For detailed parsing details of the run log, refer to the foregoing descriptions of the detection method with reference to the intrusion event A. Details are not described herein again.

### 2. Bluetooth key scenario

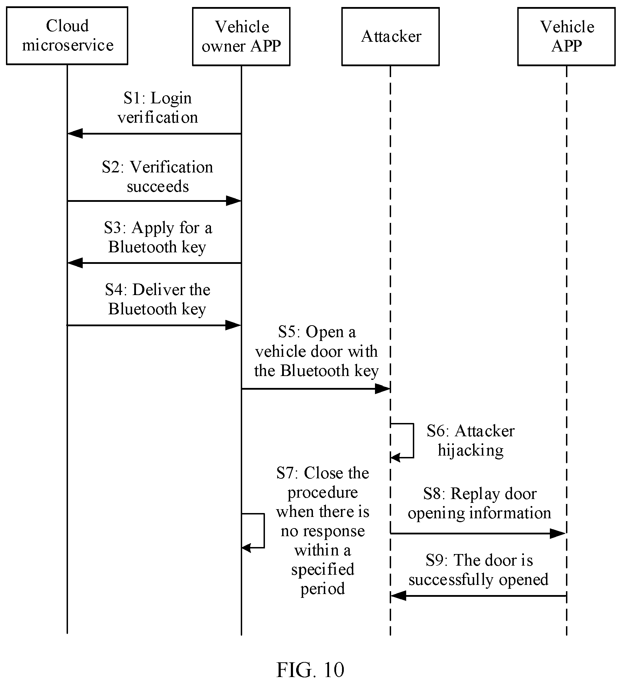

In a normal vehicle Bluetooth key (vehicle door opening) service procedure, a vehicle owner APP obtains a Bluetooth key from a corresponding microservice on a cloud, then uses the obtained Bluetooth key to perform Bluetooth communication with a vehicle, and sends a door opening request to open a vehicle door. In this embodiment of this application, an attack mode shown in FIG. 10 may be obtained by modeling a common attack scenario of a Bluetooth key service. An attacker hijacks Bluetooth communication between the vehicle owner APP and the vehicle, and replays the message after a vehicle owner leaves the vehicle, to illegally open the vehicle door.

As shown in FIG. 10, the Bluetooth key scenario may include the following steps.

S1: The vehicle owner APP requests the cloud microservice to perform login verification.

S2: After verification succeeds, the cloud microservice sends feedback information to the vehicle owner APP.

S3: After login success, the vehicle owner APP applies to the cloud microservice for the Bluetooth key.

S4: The cloud microservice delivers the Bluetooth key to the vehicle owner APP.

S5: The vehicle owner APP requests, by using the Bluetooth key, the vehicle to open the vehicle door. In this process, the attacker may hijack Bluetooth communication between the vehicle owner APP and the vehicle in S6 to obtain the Bluetooth key. S7: The vehicle owner APP closes the door opening procedure if the vehicle owner APP does not receive a response within a specified period.

S8: The attacker replays door opening information to request to open the vehicle door.

S9: The vehicle sends, to the attacker, a notification indicating that the vehicle door is successfully opened.

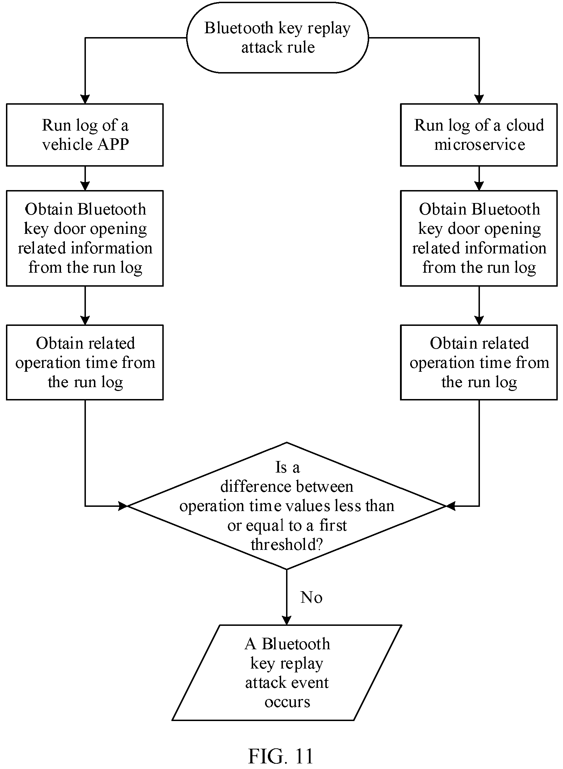

After threat modeling is performed on the attack scenario shown in FIG. 10, which ends are affected in the attack process can be identified. Through identification, it can be found that run logs of the vehicle owner APP and a vehicle APP need to be collected and analyzed to generate an intrusion detection rule corresponding to a Bluetooth key door opening replay attack. Then, an intrusion detection method shown in FIG. 11 may be performed.

A data collection module of a server may collect the run log of the vehicle APP and a run log of the cloud microservice, and provide the obtained run logs to an intrusion detection analysis engine. The intrusion detection analysis engine extracts, according to a Bluetooth key replay attack rule, Bluetooth key door opening related information from collected log data, for example, related operation time (for example, operation time of using a Bluetooth key door opening instruction or operation time of receiving the Bluetooth key door opening instruction). The intrusion detection analysis engine may compare two extracted operation time values, for example, calculate whether a difference between the two time values meets a detection condition (for example, less than or equal to a first threshold). If the detection condition is not met, that is, the difference between the two time values is excessively large, it indicates that the vehicle may undergo a Bluetooth key replay attack.

It should be noted that, in this embodiment of this application, for the vehicle, the attacker may open the vehicle door through the Bluetooth key replay attack and cause another vehicle attack. Therefore, in an optional implementation, priorities may be further set for intrusion events and candidate detection rules in different scenarios. During specific implementation, intrusion detection may be performed step by step based on the priorities. For example, for the vehicle, each time intrusion detection is performed, the Bluetooth key replay attack is first detected. In this case, when it is determined that the Bluetooth key replay attack exists, the vehicle is stolen and is in an insecure state, another service implemented based on the vehicle is insecure, and intrusion detection in another scenario does not need to be performed.

It should be understood that this is merely example descriptions of an implementation sequence of intrusion detection in different scenarios, and is not any limitation. During specific implementation, alternatively, the priorities may not be set. Details are not described herein again.

So far, application of the intrusion detection method in embodiments of this application in the internet of vehicles scenario has been explained with reference to the accompanying drawings and embodiments. According to the method, log data from a plurality of ends for a target service of a same vehicle can be parsed by using a set-in detection rule set in a server, to detect an intrusion event. From a service level, the method can be used to effectively identify an intrusion attack against a vehicle-level service, without being limited to a single service node. In addition, the method can be decoupled from a normal service of each service node, without affecting normal implementation of the service of the service node. Because a security defense level of the server is higher than that of a vehicle ECU, a risk of an attack against an intrusion detection analysis engine is greatly reduced. In addition, on an output device associated with the server, a frontend user can view details of the intrusion event, and can obtain related context information of the intrusion event from a storage module and present the related context information. This helps the frontend user perform confirmation, source tracing, emergency response, and the like on the intrusion event. A portal provided by the server and used to configure a candidate detection rule may further help a skilled person update the set-in detection rule set in the intrusion detection analysis engine in time based on an update of an attack means or undetected information of historical intrusion data.

It should be understood that the intrusion detection method described in embodiments of this application may be further applied to the IoT field. In the IoT field, log data from a plurality of ends of a same object may be parsed according to a method that is the same as or similar to the foregoing method in the internet of vehicles scenario, to determine whether an intrusion event occurs. For implementation details, refer to the foregoing related descriptions. Details are not described herein again.

An embodiment of this application further provides a communication apparatus, configured to perform the method performed by the server, the vehicle ECU, the smart terminal, and the like in the foregoing method embodiments. For related features, refer to the foregoing method embodiments. Details are not described herein again.

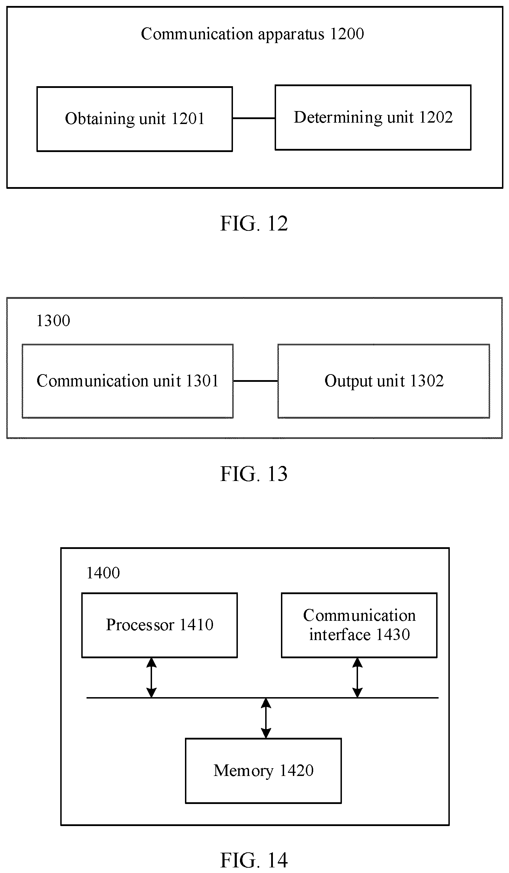

As shown in FIG. 12, in an example, the communication apparatus 1200 may include: an obtaining unit 1201, configured to obtain run logs of at least two service nodes, where the at least two service nodes are associated with a target service; and a determining unit 1202, configured to determine, based on the run logs of the at least two service nodes and according to a target detection rule, whether the intrusion event occurs, where the target detection rule is used to describe a method for detecting the intrusion event associated with the target service. For a specific implementation, refer to the method steps implemented by the server in the foregoing method embodiments. Details are not described herein again.

In another example, an embodiment of this application further provides an HMI. As shown in FIG. 13, the HMI 1300 may include: a communication unit 1301, configured to receive an intrusion detection result of a target intrusion event, where the intrusion detection result indicates at least one of the following information of the target intrusion event: an event identifier, an event name, a threat level, a detection event, a potential risk, an intrusion attack object, an intrusion detection procedure, or intrusion detection context information; and an output unit 1302, configured to output the intrusion detection result of the target intrusion event. For a specific implementation, refer to the method steps implemented by the output device in the foregoing method embodiments. Details are not described herein again.

It should be understood that division into the units in the foregoing apparatus is merely logical function division. During actual implementation, all or some of the units may be integrated into a physical entity, or may be physically separated. In addition, the units in the apparatus may be implemented in a form of invoking software by a processor. For example, the apparatus includes the processor. The processor is connected to a memory. The memory stores instructions. The processor invokes the instructions stored in the memory, to implement any one of the foregoing methods or implement functions of each unit of the apparatus. For example, the processor is a general-purpose processor, for example, a central processing unit (Central Processing Unit, CPU) or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by a programmable logic device (programmable logic device, PLD). A field programmable gate array (Field Programmable Gate Array, FPGA) is used as an example. The field programmable gate array may include a large quantity of logic gate circuits. A configuration file is used to configure a connection relationship between the logic gate circuits, to implement the functions of some or all of the units. All the units in the foregoing apparatus may be implemented in the form of invoking the software by the processor, or may be implemented in the form of the hardware circuit, or some of the units may be implemented in the form of invoking the software by the processor, and a remaining part may be implemented in the form of the hardware circuit.

In embodiments of this application, the processor is a circuit that has a signal processing capability. In an implementation, the processor may be a circuit that has an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit, for example, an FPGA, implemented by an ASIC or a PLD. In the reconfigurable hardware circuit, a process in which the processor loads a configuration document to implement configuration of the hardware circuit may be understood as a process in which the processor loads instructions to implement the functions of some or all of the units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep Learning Processing Unit, DPU).

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated and implemented in a form of a system-on-a-chip (system-on-a-chip, SOC). The SoC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

In a simple embodiment, a person skilled in the art may figure out that the communication apparatus in the foregoing embodiments may be in a form shown in FIG. 14.

An apparatus 1400 shown in FIG. 14 includes at least one processor 1410 and a communication interface 1430. In an optional design, a memory 1420 may be further included.

In this embodiment of this application, a specific connection medium between the processor 1410 and the memory 1420 is not limited.

In the apparatus shown in FIG. 14, when communicating with another device, the processor 1410 may perform data transmission through the communication interface 1430.

When the communication apparatus is in the form shown in FIG. 14, the processor 1410 in FIG. 14 may invoke computer-executable instructions stored in the memory 1420, for the apparatus 1400 to perform any one of the foregoing method embodiments.

An embodiment of this application further relates to a chip system. The chip system includes a processor, configured to invoke a computer program or computer instructions stored in a memory, for the processor to perform the method in any one of the foregoing embodiments.

In a possible implementation, the processor may be coupled to the memory through an interface.

In a possible implementation, the chip system may further directly include a memory. The memory stores a computer program or computer instructions.

For example, the memory may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, for the processor to perform the method in any one of the foregoing embodiments.

For example, in this embodiment of this application, the processor is an integrated circuit chip, and has a signal processing capability. For example, the processor may be an FPGA, may be a general-purpose processor, a DSP, an ASIC or another programmable logic device, a discrete gate or transistor logic device, or a discrete hardware component, may be a system-on-a-chip (system on chip, SoC), may be a CPU, may be a network processor (network processor, NP), may be a microcontroller (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor, or the like. The steps of the method disclosed with reference to embodiments of this application may be directly performed and accomplished by a hardware decoding processor, or may be performed and accomplished by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on the computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. An intrusion detection method, applied to a server, wherein the method comprises:
obtaining (S310) run logs of at least two service nodes, wherein the at least two service nodes are associated with a target service; and
determining (S320), based on the run logs of the at least two service nodes and according to a target detection rule, whether the intrusion event occurs, wherein the target detection rule is used to describe a method for detecting the intrusion event associated with the target service,
wherein the method further comprises:
obtaining the target detection rule from a detection rule set based on the run log, wherein the detection rule set comprises candidate detection rules that are pre-configured for a plurality of potential intrusion attack behaviors toward the target service, and the candidate detection rule is used to describe a method for detecting an intrusion event corresponding to the potential intrusion attack behavior.

2. The method according to claim 1, wherein the target detection rule comprises a rule that indicates a detection field of the intrusion event and at least one detection condition, the detection field represents a feature of a potential intrusion attack behavior toward the target service, and the determining, based on the run logs of the at least two service nodes and according to a target detection rule, whether the intrusion event occurs comprises:
obtaining target data from the run logs of the at least two service nodes based on the detection field indicated by the target detection rule; and
when the run log and the target data meet all detection conditions in the at least one detection condition, determining that the intrusion event does not occur; or
when the run log or the target data does not meet any detection condition in the at least one detection condition, determining that the intrusion event occurs.

3. The method according to claim 2, wherein the detection field of the intrusion event comprises a timestamp, the target data comprises a time value corresponding to the timestamp, and the at least one detection condition comprises:
a difference between time values obtained from the run logs of the at least two service nodes is less than or equal to a first threshold.

4. The method according to claim 2 or 3, wherein the detection field of the intrusion event comprises a uniform resource locator, URL, the target data comprises URL data, and the at least one detection condition comprises:
content of URL data obtained from the run logs of the at least two service nodes is the same.

5. The method according to any one of claims 2 to 4, wherein the detection field of the intrusion event comprises an operation identifier, the operation identifier is associated with execution of an operation comprised in the target service, the target data comprises data corresponding to the operation identifier, and the at least one detection condition comprises:
content of data corresponding to operation identifiers obtained from the run logs of the at least two service nodes is the same.

6. The method according to any of the claims 1 to 5, wherein
the target detection rule comprises all the candidate detection rules in the detection rule set; or
the target detection rule comprises a candidate detection rule that is in the detection rule set and that is associated with the target service.

7. The method according to any of the claims 1 to 6, wherein the method further comprises:
receiving configuration information, wherein the configuration information is used to modify the candidate detection rule in the detection rule set, and/or the configuration information is used to newly add a candidate detection rule to the detection rule set.

8. The method according to any one of claims 1 to 7, wherein the method further comprises:
outputting a detection result of the intrusion event on an output device associated with the server.

9. The method according to claim 8, wherein the detection result of the intrusion event comprises at least one of the following information of the intrusion event: an event identifier, an event name, a threat level, detection time, a potential risk, an intrusion attack object, an intrusion detection procedure, or intrusion detection context information.

10. The method according to any one of claims 1 to 9, wherein the target service comprises a vehicle service, and the at least two service nodes comprise the server, and a target vehicle or user equipment that is of a user and that is used to manage the target vehicle.

11. A communication apparatus (1200, 1300, 1400), configured to implement the method according to any one of claims 1 to 10.

## Patentansprüche

1. Verfahren zur Eindringungserkennung, das auf einen Server angewendet wird, wobei das Verfahren Folgendes umfasst:
Erhalten (S310) von Laufprotokollen von mindestens zwei Dienstknoten, wobei die mindestens zwei Dienstknoten mit einem Zieldienst verknüpft sind; und
Bestimmen (S320), ob das Eindringungsereignis auftritt, basierend auf den Laufprotokollen der mindestens zwei Dienstknoten und gemäß einer Zielerkennungsregel, wobei die Zielerkennungsregel verwendet wird, um ein Verfahren zum Erkennen des mit dem Zieldienst verknüpften Eindringungsereignisses zu beschreiben,
wobei das Verfahren ferner Folgendes umfasst:
Erhalten der Zielerkennungsregel aus einem Erkennungsregelsatz basierend auf dem Laufprotokoll, wobei der Erkennungsregelsatz Kandidatenerkennungsregeln umfasst, die für eine Vielzahl von potenziellen Eindringungsangriffsverhalten gegenüber dem Zieldienst vorkonfiguriert sind, und die Kandidatenerkennungsregel verwendet wird, um ein Verfahren zum Erkennen eines Eindringungsereignisses, das dem potenziellen Angriffsverhalten entspricht, zu beschreiben.

2. Verfahren nach Anspruch 1, wobei die Zielerkennungsregel eine Regel umfasst, die ein Erkennungsfeld des Eindringungsereignisses und mindestens eine Erkennungsbedingung angibt, das Erkennungsfeld ein Merkmal eines potenziellen Eindringungsangriffsverhaltens gegenüber dem Zieldienst darstellt und das Bestimmen, ob das Eindringungsereignis auftritt, basierend auf den Laufprotokollen der mindestens zwei Dienstknoten und gemäß einer Zielerkennungsregel Folgendes umfasst:
Erhalten von Zieldaten aus den Laufprotokollen der mindestens zwei Dienstknoten basierend auf dem durch die Zielerkennungsregel angegebenen Erkennungsfeld; und
wenn das Laufprotokoll und die Zieldaten alle Erkennungsbedingungen in der mindestens einen Erkennungsbedingung erfüllen, Bestimmen, dass das Eindringungsereignis nicht auftritt; oder
wenn das Laufprotokoll oder die Zieldaten keine Erkennungsbedingung in der mindestens einen Erkennungsbedingung erfüllen, Bestimmen, dass das Eindringungsereignis auftritt.

3. Verfahren nach Anspruch 2, wobei das Erkennungsfeld des Eindringungsereignisses einen Zeitstempel umfasst, die Zieldaten einen dem Zeitstempel entsprechenden Zeitwert umfassen und die mindestens eine Erkennungsbedingung Folgendes umfasst:
eine Differenz zwischen den aus den Laufprotokollen der mindestens zwei Dienstknoten erhaltenen Zeitwerten ist weniger als oder gleich einem ersten Schwellenwert.

4. Verfahren nach Anspruch 2 oder 3, wobei das Erkennungsfeld des Eindringungsereignisses einen Uniform Resource Locator, URL, umfasst, die Zieldaten URL-Daten umfassen und die mindestens eine Erkennungsbedingung Folgendes umfasst:
ein Inhalt der aus den Laufprotokollen der mindestens zwei Dienstknoten erhaltenen URL-Daten ist identisch.

5. Verfahren nach einem der Ansprüche 2 bis 4, wobei das Erkennungsfeld des Eindringungsereignisses eine Operationskennung umfasst, die Operationskennung mit einer Ausführung einer in dem Zieldienst enthaltenen Operation verknüpft ist, die Zieldaten Daten umfassen, die der Operationskennung entsprechen, und die mindestens eine Erkennungsbedingung Folgendes umfasst:
ein Inhalt der aus den Laufprotokollen der mindestens zwei Dienstknoten erhaltenen Daten, die Operationskennungen entsprechen, ist identisch.

6. Verfahren nach einem der Ansprüche 1 bis 5, wobei
die Zielerkennungsregel alle Kandidatenerkennungsregeln in dem Erkennungsregelsatz umfasst; oder
die Zielerkennungsregel eine Kandidatenerkennungsregel umfasst, die in dem Erkennungsregelsatz ist und die mit dem Zieldienst verknüpft ist.

7. Verfahren nach einem der Ansprüche 1 bis 6, wobei das Verfahren ferner Folgendes umfasst:
Empfangen von Konfigurationsinformationen, wobei die Konfigurationsinformationen verwendet werden, um die Kandidatenerkennungsregel in dem Erkennungsregelsatz zu ändern,
und/oder die Konfigurationsinformationen verwendet werden, um dem Erkennungsregelsatz eine neue Kandidatenerkennungsregel hinzuzufügen.

8. Verfahren nach einem der Ansprüche 1 bis 7, wobei das Verfahren ferner Folgendes umfasst:
Ausgeben eines Erkennungsergebnisses des Eindringungsereignisses auf einer mit dem Server verknüpften Ausgabeeinrichtung.

9. Verfahren nach Anspruch 8, wobei das Erkennungsergebnis des Eindringungsereignisses mindestens eine der folgenden Informationen des Eindringungsereignisses umfasst: eine Ereigniskennung, einen Ereignisnamen, eine Bedrohungsstufe, einen Erkennungszeitpunkt, ein potenzielles Risiko, ein Eindringungsangriffsobjekt, eine Prozedur zur Eindringungserkennung oder Eindringungserkennungskontextinformationen.

10. Verfahren nach einem der Ansprüche 1 bis 9, wobei der Zieldienst einen Fahrzeugdienst umfasst und die mindestens zwei Dienstknoten den Server und ein Zielfahrzeug oder ein Benutzergerät umfassen, das von einem Benutzer ist und das verwendet wird, um das Zielfahrzeug zu verwalten.

11. Kommunikationsvorrichtung (1200, 1300, 1400), die dazu konfiguriert ist, das Verfahren nach einem der Ansprüche 1 bis 10 umzusetzen.

## Revendications

1. Procédé de détection d'intrusion, appliqué à un serveur, dans lequel le procédé comprend :
l'obtention (S310) des journaux d'exécution d'au moins deux nœuds de service, dans lequel les au moins deux nœuds de service sont associés à un service cible ; et
le fait de déterminer (S320), sur la base des journaux d'exécution des au moins deux nœuds de service et selon une règle de détection cible, si l'événement d'intrusion se produit ou non, dans lequel la règle de détection cible est utilisée pour décrire un procédé de détection de l'événement d'intrusion associé au service cible,
dans lequel le procédé comprend en outre :
l'obtention de la règle de détection cible à partir d'un ensemble de règles de détection sur la base du journal d'exécution, dans lequel l'ensemble de règles de détection comprend des règles de détection candidates qui sont préconfigurées pour une pluralité de comportements potentiels d'attaque par intrusion envers le service cible, et la règle de détection candidate est utilisée pour décrire un procédé de détection d'un événement d'intrusion correspondant au comportement potentiel d'attaque par intrusion.

2. Procédé selon la revendication 1, dans lequel la règle de détection de cible comprend une règle indiquant un champ de détection de l'événement d'intrusion et au moins une condition de détection, le champ de détection représente une caractéristique d'un comportement potentiel d'attaque par intrusion envers le service cible, et le fait de déterminer, sur la base des journaux d'exécution des au moins deux nœuds de service et selon une règle de détection de cible, si l'événement d'intrusion se produit ou non comprend :
l'obtention de données cibles à partir des journaux d'exécution des au moins deux nœuds de service sur la base du champ de détection indiqué par la règle de détection cible ; et
lorsque le journal d'exécution et les données cibles répondent à toutes les conditions de détection dans l'au moins une condition de détection, la détermination que l'événement d'intrusion ne se produit pas ; ou
lorsque le journal d'exécution ou les données cibles ne répondent à aucune condition de détection dans l'au moins une condition de détection, la détermination que l'événement d'intrusion se produit.

3. Procédé selon la revendication 2, dans lequel le champ de détection de l'événement d'intrusion comprend un horodatage, les données cibles comprennent une valeur temporelle correspondant à l'horodatage, et l'au moins une condition de détection comprend :
une différence entre les valeurs temporelles obtenues à partir des journaux d'exécution des au moins deux nœuds de service est inférieure ou égale à un premier seuil.

4. Procédé selon la revendication 2 ou 3, dans lequel le champ de détection de l'événement d'intrusion comprend un localisateur de ressources uniforme, URL, les données cibles comprennent des données d'URL, et l'au moins une condition de détection comprend :
le contenu de données URL obtenues à partir des journaux d'exécution des au moins deux nœuds de service est identique.

5. Procédé selon l'une quelconque des revendications 2 à 4, dans lequel le champ de détection de l'événement d'intrusion comprend un identifiant d'opération, l'identifiant d'opération est associé à l'exécution d'une opération comprise dans le service cible, les données cibles comprennent des données correspondant à l'identifiant d'opération, et l'au moins une condition de détection comprend :
le contenu de données correspondant à des identifiants d'opération obtenus à partir des journaux d'exécution des au moins deux nœuds de service est identique.

6. Procédé selon l'une quelconque des revendications 1 à 5, dans lequel
la règle de détection cible comprend toutes les règles de détection candidates de l'ensemble de règles de détection ; ou
la règle de détection cible comprend une règle de détection candidate qui fait partie de l'ensemble de règles de détection et qui est associée au service cible.

7. Procédé selon l'une quelconque des revendications 1 à 6, dans lequel le procédé comprend en outre :
la réception d'informations de configuration, dans lequel les informations de configuration sont utilisées pour modifier la règle de détection candidate dans l'ensemble de règles de détection, et/ou les informations de configuration sont utilisées pour ajouter une nouvelle règle de détection candidate à l'ensemble de règles de détection.

8. Procédé selon l'une quelconque des revendications 1 à 7, dans lequel le procédé comprend en outre :
la livraison en sortie d'un résultat de détection de l'événement d'intrusion sur un dispositif de sortie associé au serveur.

9. Procédé selon la revendication 8, dans lequel le résultat de détection de l'événement d'intrusion comprend au moins l'une des informations suivantes sur l'événement d'intrusion : un identifiant d'événement, un nom d'événement, un niveau de menace, une heure de détection, un risque, un objet d'attaque par intrusion, une procédure de détection d'intrusion ou des informations de contexte de détection d'intrusion.

10. Procédé selon l'une quelconque des revendications 1 à 9, dans lequel le service cible comprend un service de véhicule, et les au moins deux nœuds de service comprennent le serveur, et un véhicule cible ou un équipement utilisateur qui appartient à un utilisateur et qui est utilisé pour gérer le véhicule cible.

11. Appareil de communication (1200, 1300, 1400), configuré pour mettre en œuvre le procédé selon l'une quelconque des revendications 1 à 10.
